(19) Europäisches Patentamt
European Patent Office
Office européen des brevets

(11) **EP 3 417 005 B1**

(12) **EUROPÄISCHE PATENTSCHRIFT**

(45) Veröffentlichungstag und Bekanntmachung des Hinweises auf die Patenterteilung:
**01.06.2022 Patentblatt 2022/22**

(21) Anmeldenummer: **17701676.3**

(22) Anmeldetag: **23.01.2017**

(51) Internationale Patentklassifikation (IPC):
**C09J 11/00** (2006.01)   **C09J 201/08** (2006.01)
**C09J 133/08** (2006.01)   **C09J 133/02** (2006.01)
**C08K 5/00** (2006.01)

(52) Gemeinsame Patentklassifikation (CPC):
**C09J 11/00; C09J 133/02; C09J 133/08; C09J 201/08;** C08K 5/0091; C08L 2312/00

(86) Internationale Anmeldenummer:
**PCT/EP2017/051283**

(87) Internationale Veröffentlichungsnummer:
**WO 2017/140459 (24.08.2017 Gazette 2017/34)**

(54) **KLEBEMASSE INSBESONDERE FÜR GEKRÜMMTE OBERFLÄCHEN**

ADHESIVE COMPOUND IN PARTICULAR FOR CURVED SURFACES

SUBSTANCE ADHÉSIVE, EN PARTICULIER POUR SURFACE COURBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2016 DE 102016202353**

(43) Veröffentlichungstag der Anmeldung:
**26.12.2018 Patentblatt 2018/52**

(73) Patentinhaber: **tesa SE**
**22848 Norderstedt (DE)**

(72) Erfinder:
• **ARDENTE, Elisabetta**
**22529 Hamburg (DE)**
• **PÜTZ, Benjamin**
**22527 Hamburg (DE)**
• **PETERS, Markus**
**22397 Hamburg (DE)**

(74) Vertreter: **tesa SE**
**Hugo-Kirchberg-Straße 1**
**22848 Norderstedt (DE)**

(56) Entgegenhaltungen:
EP-A1- 1 882 707       EP-A2- 1 302 521
WO-A1-2014/001096      DE-A1-102009 031 421
DE-A1-102013 226 714   US-A1- 2014 378 614

**Beschreibung**

Die Erfindung betrifft eine vernetzbare Klebemasse, umfassend zumindest eine erste Basispolymerkomponente mit für eine kovalente Vernetzung und für eine koordinative Vernetzung geeigneten funktionellen Gruppen, sowie zumindest einen kovalenten Vernetzer und zumindest einen koordinativen Vernetzer; die Erfindung betrifft weiterhin eine vernetzte Haftklebemasse erhältlich durch Vernetzung der vernetzbaren Klebemasse.

Für einen Haftkleber sind je nach Zweck und Anwendung verschiedene Eigenschaften erforderlich. Eine dieser Eigenschaften ist die Fähigkeit, einen elastisch verformten flexiblen Gegenstand, typischerweise in Form einer Folie, Kunststoff- oder Metallplatte oder Schaumstofffolie/-platte, gegen eine durch den ausgeübte Rückstoßkraft unter Rückkehr in seine ursprüngliche Form, zu halten (d. h. eine Fähigkeit, der Rückstoßkraft des Gegenstandes zu widerstehen - nachfolgend als "Rückstoßwiderstand" ("repulsion resistance") bezeichnet -, wenn der Gegenstand zur Anpassung an die Oberflächenkonturen einer Klebefläche (die gekrümmt, rau, und so weiter sein kann) elastisch verformt wird. Der Rückstoßwiderstand ist besonders wichtig in, beispielsweise, einer doppelseitigen Haftkleberfolie, die zum Befestigen eines Gegenstandes an einer gekrümmten Klebefläche verwendet wird.

In der Elektronikindustrie geschieht die Befestigung von Bauteilen oder optischen Linsen im üblicherweise aus Kunststoff oder Metall bestehenden Gehäuse von elektronischen Geräten, insbesondere tragbaren Kleingeräten wie Mobiltelefonen und dergleichen, heutzutage hauptsächlich mittels doppelseitiger Klebebänder. Aufgrund neuartiger Designtrends und technologischer Möglichkeiten werden immer häufiger gebogene oder runde Geräte entworfen. Der Fachmann ist daher interessiert an geeigneten und immer besseren Klebemassen für doppelseitige Klebebänder zur Rundverklebung solcher Bauteile mit gebogenen Designs. Das Anforderungsprofil für Klebemassen für diese Anwendungen umfasst einen hohen Rückstoßwiderstand, da die Bauteile häufig mit Spannung verklebt werden. Ebenso ist eine rückstandsfreie Entfernung der Klebmassen notwendig, um in einem Fall eines Defekts die Geräte schnell und sauber repariert werden können.

In der Druckindustrie sind unterschiedliche Verfahren bekannt, um Motive mittels druckender Vorlagen auf beispielsweise Papier zu übertragen. Eine Möglichkeit besteht im sogenannten Flexodruck. Im Flexodruckverfahren werden flexible Druckplatten (auch als Klischees bezeichnet) auf Druckzylinder oder Druckhülsen verklebt. Derartige Klischees bestehen beispielsweise aus einer Polyethylenterephthalat-Folie (PET-Folie), auf die eine Schicht eines Fotopolymers aufgebracht ist, in die durch Belichtung das entsprechende Druckrelief eingebracht werden kann. Die Verklebung des Klischees auf dem Druckzylinder bzw. der Druckhülse erfolgt dann über die PET- Folie. Zur Verklebung werden in der Regel doppelseitige Haftklebebänder eingesetzt, an die sehr hohe Anforderungen gestellt werden. Für den Druckprozess muss das Haftklebeband einen hohen Rückstoßwidersrand aufweisen, um die Klischees werden des gesamten Druckprozesses auf dem Zylinder bzw. der Hülse zu befestigen. Dies gilt auch bei erhöhten Temperaturen von bis zu 50 °C und bei höheren Druckgeschwindigkeiten. Neben dieser Eigenschaft muss die Haftklebemasse aber auch reversible Hafteigenschaften besitzen, um die Druckplatten nach den Druckvorgängen wieder ablösen zu können (dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten).

Daher ist es sinnvoll, eine Technologie zur Erhöhung des Rückstoßwiderstands zur Verfügung zu stellen, ohne andere Eigenschaften, wie beispielsweise das Haftvermögen (die Haftklebrigkeit), die Kohäsionsfestigkeit und so weiter erheblich zu beeinflussen; oder eine Haftkleberfolie, worin diese Technologie angewendet wird.

Haftklebemassen werden in dem bekannten Stand der Technik mit nur jeweils einem singulär verwendetem kovalenten Vernetzers oder alternativ mit einem singulär verwendetem koordinativen Vernetzer auf ein notwendige Kohäsionsfestigkeit eingestellt. Eine kombinierte Verwendung dieser Vernetzer ist jedenfalls nicht in definierten Mengenverhältnissen zueinander bekannt, um gewünschte Eigenschaften der Klebemasse einzustellen.

Ein Ziel der vorliegenden Erfindung ist es, Klebemassen zur Verfügung zu stellen, die insbesondere in Ausformung als Klebeschicht bzw. als Klebefolie hinsichtlich ihres Rückstoßwiderstands verbessert sind. Ein weiteres Ziel dieser Erfindung ist es, Klebemassen zur Verfügung zu stellen, die insbesondere in Ausformung als Klebeschicht bzw. als Klebefolie zusätzlich zu dem Rückstoßwiderstand ein hohes Maß anderer Eigenschaften, wie beispielsweise Haftvermögen (Haftklebrigkeit), Kohäsionsfestigkeit und so weiter in guter Ausgewogenheit aufweist.

Die Erfindung gemäß Anspruch 1 betrifft eine vernetzbare Klebemasse, umfassend ein Basispolymer sowie zumindest einen kovalenten und zumindest einen koordinativen Vernetzer. Erfindungsgemäß sind die vernetzbaren Klebemassen Acrylatklebemassen, insbesondere Acrylathaftklebemassen. Zur Vernetzung werden zumindest ein koordinativer Vernetzer und zumindest ein kovalenter Vernetzer gemeinsam eingesetzt. Die Erfindung betrifft dem entsprechend weiterhin ein Vernetzersystem, umfassend zumindest einen kovalenten Vernetzer in einer Gesamtmenge von 0,015 bis 0,04 Gewichtsteilen, bezogen auf 100 Gewichtsteile der Basispolymerkomponente und zumindest einen koordinativen Vernetzer, in einer Gesamtmenge von 0,03 bis 0,15 Gewichtsteilen, bezogen auf 100 Gewichtsteile der Basispolymerkomponente in einem molaren Verhältnis von 1 : 1,3 bis 1 : 4,5 zueinander.

Die Erfindung betrifft weiterhin eine vernetzte Klebemasse, erhältlich durch Vernetzung der erfindungsgemäßen vernetzbaren Klebemasse.

Haftklebemassen (PSA; englisch: "pressure sensitive adhesives") sind insbesondere solche polymeren Massen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und klebfähig sind und an einer Vielzahl von Oberflächen bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebemassen gehen unter anderem insbesondere auf deren viskoelastische Eigenschaften zurück. So können beispielsweise schwach oder stark anhaftende Klebemassen hergestellt werden; weiterhin solche, die nur einmalig und permanent verklebbar sind, so dass die Verklebung ohne Zerstörung des Klebemittels und/oder der Substrate nicht gelöst werden können, oder solche die leicht wiederablösbar und gegebenenfalls mehrfach verklebbar sind.

Haftklebemassen können grundsätzlich auf Grundlage von Polymeren unterschiedlicher chemischer Natur hergestellt werden. Die haftklebenden Eigenschaften werden unter anderem durch die Art und die Mengenverhältnisse der eingesetzten Monomere bei der Polymerisation der der Haftklebemasse zugrunde liegenden Polymere, deren mittlere Molmasse und Molmassenverteilung sowie durch Art und Menge der Zusatzstoffe der Haftklebemasse, wie Klebharze, Weichmacher und dergleichen, beeinflusst.

Zur Erzielung der viskoelastischen Eigenschaften werden die Monomere, auf denen die der Haftklebemasse zugrunde liegenden Polymere basieren, sowie die gegebenenfalls vorhandenen weiteren Komponenten der Haftklebemasse insbesondere derart gewählt, dass die Haftklebemasse eine Glasübergangstemperatur (nach DIN 53765) unterhalb der Anwendungstemperatur (also üblicherweise unterhalb der Raumtemperatur) aufweisen. Durch geeignete kohäsionssteigernde Maßnahmen, wie beispielsweise Vernetzungreaktionen (Ausbildung brückenbildender Verknüpfungen zwischen den Makromolekülen), kann der Temperaturbereich, in dem eine Polymermasse haftklebrige Eigenschaften aufweist, vergrößert und/oder verschoben werden. Der Anwendungsbereich der Haftklebemassen kann somit durch eine Einstellung zwischen Fließfähigkeit und Kohäsion der Masse optimiert werden.

Zur Erzielung gewünschter Eigenschaften einer Haftklebemasse, beispielsweise um eine hinreichende Kohäsion der Haftklebemassen zu erreichen, werden die Haftklebemassen in der Regel vernetzt, das heißt, die einzelnen Makromoleküle werden durch Brückenbindungen miteinander verknüpft. Die Vernetzung kann auf unterschiedliche Weisen geschehen, so gibt es physikalische, chemische oder thermische Vernetzungsmethoden.

Als Vernetzung von Polymeren wird insbesondere eine Reaktion bezeichnet, bei der viele zunächst lineare oder verzweigte Makromoleküle durch Brückenbildung zwischen den einzelnen Makromolekülen zu einem mehr oder weniger verzweigten Netzwerk verknüpft werden. Die Brückenbildung erfolgt dabei insbesondere, indem geeignete chemische Moleküle - sogenannte Vernetzer oder Vernetzersubstanzen - mit den Makromolekülen reagieren, zum Beispiel mit bestimmten funktionellen Gruppen der Makromoleküle, die für das jeweilige Vernetzermolekül besonders angreifbar sind. Die Stellen des Vernetzermoleküls, die an den Makromolekülen angreifen, werden in der Regel als "reaktive Zentren" bezeichnet. Vernetzermoleküle können zwei Makromoleküle miteinander verknüpfen - indem ein- und dasselbe Vernetzermolekül mit zwei unterschiedlichen Makromolekülen reagiert, also insbesondere mindestens zwei reaktive Zentren besitzt -, oder Vernetzermoleküle können auch mehr als zwei reaktive Zentren aufweisen, so dass ein einziges Vernetzermolekül dann auch drei oder mehr Makromoleküle miteinander verknüpfen kann. Als Nebenreaktion kann es zu intramolekularen Reaktionen kommen, wenn ein- und dasselbe Vernetzermolekül mit mindestens zwei seiner reaktiven Zentren an ein- und demselben Makromolekül angreift. Im Sinne einer effektiven Vernetzung des Polymers sind solche Nebenreaktionen in der Regel unerwünscht.

Es kann unterschieden werden zwischen verschiedenen Typen von Vernetzern, nämlich

1.) kovalenten Vernetzern, nämlich solchen, die an der zu verknüpfenden Makromolekülen kovalenten angreifen und somit eine kovalente chemische Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren kovalente Bindungen ausbildenden chemischen Reaktionen in Frage.

2.) koordinativen Vernetzern, nämlich solchen, die an der zu verknüpfenden Makromolekülen koordinativ angreifen und somit eine koordinative Bindung zwischen ihrem entsprechenden reaktiven Zentrum und der Angriffsstelle - insbesondere der funktionellen Gruppe - am Makromolekül ausbilden. Grundsätzlich kommen hierfür alle denkbaren koordinative Bindungen ausbildenden chemischen Reaktionen in Frage.

Die erfindungsgemäße vernetzbare Klebemasse besteht insbesondere aus

(a) zumindest einer ersten Basiskomponente mit

(a1) als erster Polymerkomponente eine Basispolymerkomponente (im folgenden auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren,

wobei zumindest eines der Homopolymere oder zumindest eines der Copolymere, insbesondere alle der Polymere der Basispolymerkomponente für die Vernetzung funktionelle Gruppen aufweisen,

(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,

(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;

(c) Vernetzern, nämlich

(c1) zumindest einen kovalenten Vernetzer,
(c2) zumindest einen koordinativen Vernetzer,

und

(d) gegebenenfalls Lösemittel oder Lösemittelreste.

Als Polymere für die Basispolymerkomponente (a1) für die vorliegende Erfindung kommen solche Polymere und Polymermischungen in Frage, die sich sowohl durch kovalente als auch durch koordinative Vernetzer vernetzen lassen. Dies sind insbesondere Polymere, die für die Vernetzung freie Säuregruppen aufweisen.

Als bevorzugte Basispolymere lassen sich dabei Acrylat-Copolymere einsetzen, insbesondere solche Polymere (Copolymere, Polymermischungen), die zu mindestens 50 Gew.-% auf Acrylmonomere zurückzuführen sind. Als Comonomere für die Einführung der vernetzungsfähigen Gruppen werden dabei freie Säuregruppen aufweisende copolymerisierbare Monomere gewählt, besonders bevorzugt wird Acrylsäure eingesetzt. Säuregruppen enthaltende Monomere, wie beispielsweise Acrylsäure, haben die Eigenschaft, die haftklebrigen Eigenschaften der Haftklebemasse zu beeinflussen. Wird Acrylsäure verwendet, wird diese bevorzugt in einem Anteil von bis zu maximal 12,5 Gew.-%, bezogen auf die Gesamtheit der Monomere der Basispolymerkomponente, verwendet. Dabei wird - in Abhängigkeit der jeweils eingesetzten Vernetzermengen - bevorzugt zumindest so viel Acrylsäure einpolymerisiert, dass genug Säuregruppen zugegen sind, dass es zu einer im Wesentlichen vollständigen Umsetzung der Vernetzer kommen kann.

Eine vorteilhafte erfindungsgemäße Haftklebemasse umfasst als Basiskomponente (a) - für die vorteilhafte erfindungsgemäße Haftklebemasse im folgenden auch als PolyacrylatKomponente bezeichnet - 60 bis 100 Gew.-%, bevorzugt 65 Gew.-% bis 80 Gew.-%, an gegebenenfalls abgemischten Acrylatcopolymeren (im Sinne der Komponenten (a1) und (a2)) und optional als zweite Komponente (b) - für die vorteilhafte erfindungsgemäße Haftklebemasse im folgenden auch als Elastomer-Komponente bezeichnet - 0 bis 40 Gew.-%, bevorzugt 15 Gew.-% bis 30 Gew.-%, mit den Acrylatcopolymeren im Wesentlichen nicht homogen mischbare, gegebenenfalls ihrerseits jedoch wiederum abgemischte Elastomere (im Sinne der weiteren Polymerkomponente (b1) und (b2)), wobei die Elastomere insbesondere in Form eines oder mehrerer Synthesekautschuke gewählt werden. Die Angaben zur Zusammensetzung beziehen sich auf die Summe der Komponenten (a) und (b).

Es wurde festgestellt, dass eine solche Klebemasse hervorragende Festigkeits- und Beständigkeitseigenschaften bei solchen Belastungen aufweist, die für empfindliche feinmechanische, optische und/oder elektronische Geräte kritisch sind. Insbesondere die Anforderungskombination von hoher Push-out-Festigkeit und Schlagzähigkeit schließt sich bei den bisher ein gesetzten Klebemassen oft aus und es ist schwierig, Klebemassesysteme zu finden, bei denen beide Aspekte gleichzeitig auf ein hohes Niveau gebracht werden. Insbesondere schwierig ist, diese Eigenschaften auch noch mit Reworkability und/oder Wärmebeständigkeit zu kombinieren.

Insbesondere die Anforderung für eine gute Reworkability stehen häufig der Anforderungen für eine permanente Verklebung - also für eine solche Verklebung, die zumindest für die Benutzungsdauer der mit den verklebten Verbunden ausgerüsteten Produkte nicht versagen soll - entgegen. Auch Klebemassen, die nur eine temporäre Verklebung bewirken sollen, wie beispielsweise bei einer temporären Verklebung von Staub- und Kratzschutzfolien, die zum eigentlichen Gebrauch wieder abgezogen werden, müssen ganz anderen Anforderungsprofilen genügen.

Homogene Gemische sind auf molekularer Ebene vermischte Stoffe, homogene Systeme dementsprechend einphasige Systeme. Die zugrunde liegenden Stoffe werden im Rahmen dieser Schrift in synonymer Weise als miteinander "homogen vermischbar", "verträglich" und "kompatibel" bezeichnet. Dementsprechend sind zwei oder mehr Komponenten synonym "nicht homogen vermischbar", "nicht verträglich" und "nicht kompatibel", wenn sie nach inniger Vermengung kein homogenes System, sondern zumindest zwei Phasen ausbilden. Als synonym "teilweise homogen mischbar", "teilweise verträglich", "teilverträglich" und "teilweise kompatibel" werden Komponenten angesehen, die bei inniger Vermengung miteinander (z. B. durch Scherung, in der Schmelze oder in Lösung und anschließendem Eliminieren des Lösungsmittels) zumindest zwei Phasen ausbilden, die jeweils reich an einer der Komponenten sind, wobei aber eine oder beide der Phasen jeweils einen mehr oder weniger großen Teil der anderen Komponenten homogen eingemischt aufweisen kann.

Die Polkyacrylat-Komponente (a) der vorteilhaften erfindungsgemäßen Haftklebemasse stellt für sich bevorzugt eine homogene Phase dar. Die Elastomer-Komponente (b) kann in sich homogen vorliegen, oder in sich selbst Mehrphasigkeit aufweisen, wie es von mikrophasenseparierenden Blockcopolymeren bekannt ist. Polyacrylat- und Elastomer-Komponente sind vorliegend so gewählt, dass sie - nach inniger Vermengung - bei 23 °C (also der üblichen Anwendungstemperatur für Klebemassen) im Wesentlichen nicht mischbar sind. "Im Wesentlichen nicht mischbar" bedeutet, dass die Komponenten entweder gar nicht homogen miteinander mischbar sind, so dass keine der Phasen einen Anteil der zweiten Komponente homogen eingemischt aufweist, oder dass die Komponenten nur so wenig teilverträglich sind - dass also eine oder beide Komponenten nur einen so geringen Anteil der jeweils anderen Komponente homogen aufnehmen kann -, dass die Teilverträglichkeit für die Erfindung unwesentlich ist, also die erfindungsgemäße Lehre nicht schädlich ist. Die entsprechenden Komponenten werden im Sinne dieser Schrift dann als "im Wesentlichen frei" von der jeweils anderen Komponente angesehen.

Die vorteilhafte erfindungsgemäße Klebemasse liegt dementsprechend zumindest bei Raumtemperatur (23 °C), in zumindest zweiphasiger Morphologie vor. Sehr bevorzugt sind die Polyacrylat-Komponente und die Elastomer-Komponente in einem Temperaturbereich von 0 °C bis 50 °C, noch mehr bevorzugt von - 30 °C bis 80 °C im Wesentlichen nicht homogen mischbar.

Komponenten sind im Sinne dieser Schrift insbesondere dann als "im Wesentlichen nicht miteinander mischbar" definiert, wenn sich die Ausbildung zumindest zweier beständiger Phasen physikalisch und/oder chemisch nachweisen lässt, wobei die eine Phase reich an der einen Komponente - der Polyacrylat-Komponente - und die zweite Phase reich an der anderen Komponente - der Elastomer-Komponente - ist. Ein geeignetes Analysesystem für eine Phasentrennung ist beispielsweise die Raster-Elektronenmikroskopie. Phasenseparation kann sich aber beispielsweise auch dadurch erkennen lassen, dass die unterschiedlichen Phasen zwei voneinander unabhängige Glasübergangstemperaturen bei der dynamischen Differenzkalometrie (DDK) aufweisen. Phasentrennung liegt erfindungsgemäß dann vor, wenn sie sich zumindest durch eine der Analysenmethoden eindeutig zeigen lässt.

Die Phasentrennung kann insbesondere derart realisiert sein, dass es diskrete Bereiche ("Domänen"), die reich an einer Komponente sind (im Wesentlichen aus einer der Komponente gebildet und frei von der anderen Komponente), in einer kontinuierlichen Matrix, die reich an der anderen Komponente ist (im Wesentlichen aus der anderen Komponente gebildet und frei von der ersten Komponente), gibt.

Die Phasentrennung für die erfindungsgemäß eingesetzten Klebemassen findet insbesondere derart statt, dass die Elastomer-Komponente dispergiert in einer kontinuierlichen Matrix der Polyacrylat-Komponente vorliegt. Die durch die Elastomer-Komponente gebildeten Bereiche (Domänen) liegen bevorzugt im Wesentlichen kugelförmig vor. Die durch die Elastomer-Komponente gebildeten Bereiche (Domänen) können auch von der Kugelform abweichen, insbesondere verzerrt wie z. B. in Beschichtungsrichtung elongiert und orientiert vorliegen. Die Größe der Elastomer-Domänen liegt in ihrer größten Ausdehnung typischerweise - aber nicht zwingend - zwischen 0,5 $\mu$m und 20 $\mu$m, insbesondere zwischen 1 $\mu$m und 10 $\mu$m. Andere Domänenformen sind ebenfalls möglich, so zum Beispiel schichtförmige oder stäbchenförmige, wobei auch diese in ihrer Gestalt von idealen Strukturen abweichen können und z. B. gebogen oder verzerrt sein können.

Die Polyacrylat-Komponente und/oder die Elastomer-Komponente können jeweils als 100-%-Systeme, das heißt ausschließlich auf ihre jeweilige Polymerkomponente ((a1)bzw. (b1)) beruhend und ohne weitere Beimischung von Harzen, Additiven oder dergleichen, vorliegen. In weiterer bevorzugter Weise sind einer oder beider dieser beiden Komponenten neben der Basispolymerkomponente weitere Komponenten beigemischt, wie beispielsweise Harze.

In einer vorteilhaften Ausführung der Erfindung sind die Polyacrylat-Komponente und die Elastomer-Komponente ausschließlich aus ihrer jeweiligen Polymerkomponente ((a1) bzw. (b1)) zusammengesetzt, so dass keine weiteren polymeren Komponenten vorhanden sind, insbesondere keine Harze anwesend sind. In einer Weiterentwicklung umfasst die gesamte Klebemasse außer den beiden Polymerkomponenten (a1) und (b1) keine weiteren Bestandteile.

Die vorteilhaften erfindungsgemäßen Klebmassen können insbesondere Harz-frei sein, da die Polyacrylat-Komponente häufig bereits selbst typischerweise Haftklebrigkeit aufweist und der haftklebrige Charakter auch dann erhalten bleibt, wenn die Elastomer-Komponente zugegen ist. Trotzdem kann es von Interesse sein, die klebtechnischen Eigenschaften weiter zu verbessern oder auf spezielle Anwendungen hin zu optimieren, daher können den Klebemassen in vorteilhafter Weiterentwicklung der Erfindung Klebharze beigemischt werden.

In einer weiteren vorteilhaften Vorgehensweise sind der vorteilhaften erfindungsgemäßen Klebmasse somit Harze zugesetzt. Als Harze oder Klebharze im Sinne dieser Schrift werden oligo- und polymere Verbindungen mit einer zahlenmittleren Molmasse $M_n$ (GPC, Test F) von typischerweise nicht mehr als 5.000 g/mol angesehen. Es können auch Harzgemische zum Einsatz kommen. Insbesondere hat der überwiegende Teil der Harze (bezogen auf den Gewichtsteil an der gesamten Harzmenge), bevorzugt haben alle Harze einen Erweichungspunkt (Ring-Kugel-Verfahren analog DIN EN 1427:2007, siehe unten) von mindestens 80 °C und höchstens 150 °C.

In einer weiteren vorteilhaften Vorgehensweise sind der vorteilhaften erfindunsgemäßen Klebmasse ein oder mehrere Klebharze beigemischt, die entweder nur mit dem Polyacrylat-Basispolymer (a1), oder nur mit dem Elastomer-Polymer (b1), oder in beide Polymer-Komponenten ((a1) und (b1)) einmischbar, also mit beiden PolymerKomponenten verträglich oder teilverträglich, sind. Werden zumindest zwei Harze eingesetzt, so kann ein Teil der Harze (also zumindest eines der Harze) so gewählt werden, dass sie mit dem Polyacrylat-Basispolymer (a1) gut mischbar (verträglich), mit der Elastomer-Polymerkomponente (b1) aber schlecht oder nicht mischbar (im Wesentlichen unverträglich) sind, und ein zweiter Teil der Harze (also zumindest ein zweites Harz) so, dass sie mit der Elastomer-Polymerkomponente (b1) gut mischbar (verträglich), mit dem Polyacrylat-Basispolymer (a1) aber schlecht mischbar oder nicht mischbar (im Wesentlichen unverträglich) sind.

Die Polymer/Harz-Verträglichkeit ist unter anderem von der Molmasse der Polymere und der Harze abhängig. Die Verträglichkeit ist in der Regel besser, wenn die Molmasse(n) niedriger liegen. Für ein gegebenes Polymer kann es möglich sein, dass die niedermolekularen Bestandteile der Harzmolmassenverteilung mit dem Polymer verträglich sind, die höhermolekularen aber nicht. Beispielsweise aus einem solchen Sachverhalt kann Teilverträglichkeit resultieren.

Eine vorteilhafte Ausführungsform der vorteilhaften erfindungsgemäßen Klebemasse ist dadurch gekennzeichnet, dass die die Polyacrylat-Komponente und die Elastomerkomponete umfassende Klebmasse ein oder mehrere mit dem Polyacrylat-Basispolymer (a1) verträgliche, also mit dem Polyacrylat-Basispolymer (a1) gut mischbare Harze, insbesondere Klebharze, enthält (im folgenden als polyacrylatverträgliche (Kleb- )Harze bezeichnet). Die polyacrylatverträglichen (Kleb-)Harze können so gewählt werden, dass sie mit dem Elastomer-Polymerkomponente (b1) nicht verträglich sind, oder so, dass sie mit ihr teilverträglich sind; bei mehreren polyacrylatverträglichen (Kleb-)Harzen können die Vertreter ausschließlich aus einer dieser beiden Kategorien oder aus beiden Kategorien gewählt sein.

Polyacrylatverträgliche (Kleb-)Harz werden insbesondere bevorzugt in solch einer Menge eingesetzt, dass das Verhältnis des Polyacrylat-Basispolymers (a1) zu polyacrylatverträglichen Harzen im Bereich von 100 : 0 (Grenzbereich 100 : 0 bedeutet die Abwesenheit polyacrylatverträglicher Harze) bis 50 : 50 liegt, mehr bevorzugt im Bereich von 80 : 20 bis 60 : 40.

Eine weitere vorteilhafte Ausführungsform der vorteilhaften erfindungsgemäßen Klebmasse ist dadurch gekennzeichnet, dass die die Polyacrylat-Komponente (a) und die Elastomer-Komponente (b) umfassende Klebmasse ein oder mehrere mit der Elastomer-polymerkomponente (b1) verträgliche, also mit der Elastomer-Polymerkomponente (b1) gut mischbare, Harze, insbesondere Klebharze, enthält (im folgenden als elastomerverträgliche (Kleb-)Harze bezeichnet). Die elastomerverträglichen (Kleb-)Harze können so gewählt werden, dass sie mit dem Polyacrylat-Basispolymer (a1) nicht verträglich sind, oder so, dass sie mit ihm teilverträglich sind. Bei mehreren elastomerverträglichen (Kleb-)Harzen können die Vertreter ausschließlich aus einer dieser beiden Kategorien oder aus beiden Kategorien gewählt sein. Sehr bevorzugt wird so vorgegangen, dass die elastomerverträglichen Klebharze mit dem Polyacrylat-Basispolymer (a1) im Wesentlichen unverträglich sind.

Elastomerverträgliche (Kleb-)Harze werden insbesondere bevorzugt in einer Menge eingesetzt, das das Verhältnis von Elastomer-Polymerkomponete (a1) zu elastomerverträglichen (Kleb-)Harzen im Bereich von 100:0 (Grenzbereich 100:0 bedeutet die Abwesenheit elastomerverträglicher Harze) bis 50 : 50 liegt, bevorzugt 70 : 30.

Sofern für die vorstehenden Ausführungsvarianten nichts Gegenteiliges gesagt ist, können bei den vorstehend genannten Ausführungsformen abgesehen von den genannten Polymerkomponenten jeweils zusätzlich nichtpolymere Additive anwesend sein, es kann aber jeweils auch in Abwesenheit solcher Additive gearbeitet werden.

Die Polyacrylat-Komponente (a) der erfindungsgemäßen Klebemasse umfasst insbesondere eines oder mehrere Polymere auf Polyacrylatbasis, die die Basispolymerkomponente (a1) darstellen.

Polymere auf Polyacrylatbasis sind insbesondere solche Polymere, die zumindest überwiegend - insbesondere zu mehr als 60 Gew.-% - auf Acrylsäureestern und/oder Methacrylsäure, sowie gegebenenfalls deren freien Säuren, als Monomere (im Folgenden als "Acrylmonomere" bezeichnet) zurückzuführen sind. Polyacrylate sind bevorzugt durch freie radikalische Polymerisation erhältlich. Polyacrylate können gegebenenfalls weitere Bausteine auf Basis weiterer, nicht-acrylischer copolymerisierbarer Monomer enthalten. Bei den Polyacrylaten kann es sich um Homopolymere und/oder insbesondere um Copolymere handeln. Die Bezeichnung "Copolymer" umfasst im Sinne dieser Erfindung sowohl solche Copolymere, in denen die bei der Polymerisation eingesetzten Comonomere rein statistisch eingebaut sind, als auch solche, bei denen Gradienten in der Comonomerzusammensetzung und/oder lokale Anreicherungen einzelner Comonomersorten sowie ganze Blöcke eines Monomers in den Polymerketten vorkommen. Auch alternierende Comonomerabfolgen sind denkbar.

Die Polyacrylate können beispielsweise von linearer, verzweigter, sternförmiger oder gepfropfter Struktur sein, und es kann sich um Homopolymere oder Copolymere handeln. Vorteilhaft liegt die mittlere Molmasse (Gewichtsmittel Mw) zumindest eines der Polyacrylate des Polyacrylat-Basispolymers, bei mehreren vorhandenen Polyacrylaten vorteilhaft des überwiegenden Gewichtsteils der Polyacrylate, insbesondere aller vorhandenen Poylacrylate im Bereich von 250 000 g/mol bis 10 000 000 g/mol, bevorzugt im Bereich von 500 000 g/mol bis 5 000 000 g/mol.

Besonders bevorzugt wird die Zusammensetzung der Polyacrylat-Komponente derart gewählt, dass die Polyacrylat-Komponente eine Glasübergangstemperatur (DDK, siehe unten) von nicht mehr als 0 °C, bevorzugt von nicht mehr als - 20 °C, sehr bevorzugt von nicht mehr als - 40 °C aufweist.

Die Glastemperatur von Copolymeren kann durch Wahl und mengenmäßige Zusammensetzung der eingesetzten Komponenten vorteilhaft derart gewählt, dass sich in Analogie zur *Fox*-Gleichung nach Gleichung G1

$$\frac{1}{T_G} = \sum_n \frac{w_n}{T_{G,n}} \qquad (G1)$$

ein geeigneter Glasübergangspunkt $T_G$ für das Polymer ergibt; mit n = Laufzahl über die eingesetzten Monomere, $w_n$ = Massenanteil des jeweiligen Monomers n (Gew.-%) und $T_{G,n}$ = jeweilige Glasübergangstemperatur des Homopolymers aus den jeweiligen Monomeren n in K. Glasübergangstemperaturen von Homopolymeren können bis zu einer bestimmten oberen Grenzmolmasse von der Molmasse des Homopolymeren abhängen; die Bezugnahme auf Glasübergangstemperaturen von Homopolymeren in dieser Schrift erfolgt in Bezug auf solche Polymere, deren Molmassen oberhalb dieser Grenzmolmasse liegen, also im Glasübergangstemperatur-konstanten Bereich. Bestimmung des $T_G$ erfolgt nach Entfernung des Lösemittels im unvernetzten Zustand (in Abwesenheit von Vernetzern).

Analog kann die Gleichung G1 auch zur Bestimmung und Vorhersage der Glasübergangstemperatur von Polymergemischen angewendet werden. Dann gilt, sofern es sich um homogene Mischungen handelt,

n = Laufzahl über die eingesetzten Polymere, $w_n$ = Massenanteil des jeweiligen Polymeren n (Gew.-%) und $T_{G,n}$ = jeweilige Glasübergangstemperatur des Polymeren n in K. Durch Abmischung mit Klebharzen erhöht sich in der Regel die statische Glasübergangstemperatur.

Besonders vorteilhaft im Sinne dieser Erfindung sind statistische Copolymere einsetzbar. Zumindest eine Polymersorte der Polyacrylat-Komponente basiert vorteilhaft auf unfunktionalisierten $\alpha,\beta$-ungesättigten Estern. Werden diese für das zumindest eine Polymer in der Polyacrylat-Komponente mit Copolymercharakter verwendet, können als Monomere bei der Herstellung dieser zumindest einen Polymersorte prinzipiell alle dem Fachmann geläufigen Verbindungen, die sich zur Synthese von (Meth)acrylat(co)polymeren eignen, eingesetzt werden. Bevorzugt werden $\alpha,\beta$-ungesättigte Alkylester der allgemeinen Struktur

$$CH_2{=}C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Zumindest eine Sorte Monomere für die Polyacrylate der Polyacrylat-Komponente der vorteilhaften erfindungsgemäßen klebemasse sind solche, deren Homopolymer eine Glasübergangstemperatur $T_G$ von nicht mehr als 0 °C, sehr bevorzugt höchstens - 20 °C aufweist. Dies sind insbesondere Ester der Acrylsäure mit linearen Alkoholen mit bis 10 C-Atomen oder verzweigten Alkoholen mit mindestens 4 C-Atomen und Ester der Methacrylsäure mit linearen Alkoholen mit 8 bis 10 C-Atomen oder verzweigten Alkoholen mit mindestens 10 C-Atomen. Desweiteren können zusätzlich Monomere zum Einsatz kommen, deren Homopolymer eine Glasübergangstemperatur $T_G$ von mehr als 0 °C aufweist. Als spezifische erfindungsgemäße Beispiele werden bevorzugt ein oder mehrere Mitglieder gewählt aus der Gruppe umfassend

Methylacrylat, Methylmethacrylat, Ethylacrylat, n-Propylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, n-Nonylmethacrylat, n-Decylacrylat, n-Decylmethacrylat, Isobutylacrylat, Isopentylacrylat, Isooctylacrylat, Isooctylmethacrylat, die verzweigten Isomere der vorgenannten Verbindungen, wie zum Beispiel 2-Ethylhexylacrylat, 2-Ethylhexylmethacrylat, 2-Propylheptylacrylat.

Weiterhin können Monomere mit der Neigung zur Ausbildung teilkristalliner Bereiche im Polymer gewählt werden. Dieses Verhalten wird festgestellt für Acrylsäureester und Methacrylsäureester mit einem linearen Alkylrest mit mindestens 12 C-Atomen im Alkoholrest, bevorzugt von mindestens 14 C-Atomen im Alkoholrest. Hier lassen sich erfindungsgemäß besonders vorteilhaft beispielsweise Stearylacrylat und/oder Stearylmethacrylat einsetzen.

Weitere vorteilhaft einsetzbare Monomere sind monofunktionelle Acrylate und/oder Methacrylate von überbrückten Cycloalkylalkoholen mit zumindest 6 C-Atomen im Cycloalkylalkoholrest. Die Cycloalkylalkohole können auch substituiert sein, z.B. durch $C_1$-bis $C_6$-Alkylgruppen, Halogenatome oder Cyanogruppen. Spezifische Beispiele sind Cyclohexylmethacrylate, Isobornylacrylat, Isobornylmethacrylat und 3,5-Dimethyladamantylacrylat.

Zur Variation der Glasübergangstemperatur können zur Herstellung der Polyacrylate auch zu einem Teil solche Comonomere eingesetzt werden, deren Homopolymere eine hohe statische Glasübergangstemperatur besitzen. Als Komponenten eigenen sich aromatische Vinylverbindungen, wie z.B. Styrol, wobei bevorzugt die aromatischen Kerne $C_4$- bis $C_{18}$-Bausteine umfassen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Als Comonomere zu den Acrylmonomeren lassen sich auch weitere mit Acrylmonomeren copolymerisierbare Monomere einsetzen, zum Beispiel in einem Anteil von bis zu 40 Gew.- %. Solche Comonomere können prinzipiell alle mit den Acrylaten verträglichen Verbindungen mit copolymerisierbaren Doppelbindungen sein, wie etwa Vinylverbindungen. Solche Vinylverbindungen können ganz oder teilweise gewählt werden aus der Gruppe umfassend Vinylester, Vinylether, Vinylhalogenide, Vinylidenhalogenide, Vinylverbindungen mit aromatischen Cyclen und Heterocyclen, insbesondere in $\alpha$-Stellung zur Doppelbindung. Besonders bevorzugt geeignete Comonomere sind beispielsweise Vinylacetat, Vinylformamid, Vinylpyridin, Ethylvinylether, Vinylchlorid, Vinylidenchlorid, Acrylnitril.

Aber auch andere mit Acrylmonomeren copolymerisierbare Verbindungen sind hier einsetzbar.

Zur effektiven Vernetzung ist es insbesondere von Vorteil, wenn zumindest ein Teil der Polyacrylate funktionelle Gruppen aufweisen, mit denen die erfindungsgemäß eingesetzten Vernetzer zur Reaktion kommen können. Bevorzugt werden hierfür Monomere mit Säuregruppen eingesetzt, wie beispielsweise Acrylsäure-, Sulfonsäureoder Phosphonsäuregruppen, oder mit Säureanhydridbausteinen.

Besonders bevorzugte Beispiele für Monomere für Polyacrylate sind Acrylsäure, Methacrylsäure, Itaconsäure, Maleinsäure, Fumarsäure, Crotonsäure, Aconitsäure, Dimethylacrylsäure, $\beta$-Acryloyloxypropionsäure, Trichloracrylsäure, Vinylessigsäure, Vinylphosphonsäure, Maleinsäureanhydrid.

In einer vorteilhaften Ausführungsform der Erfindung sind der Polyacrylat-Komponente ein oder mehrere polyacrylatverträgliche Klebharze beigemischt, das im Wesentlichen mit dem Polyacrylat kompatibel ist. Hierbei kann grundsätzlich auf die als hierfür geeignet bekannten Klebharze zurückgegriffen werden. Besonders bevorzugt werden Terpenphenolharze eingesetzt. Es sind aber beispielsweise auch Kolophoniumderivate, insbesondere Kolophoniumester einsetzbar.

Die polyacrylatverträglichen Harze weisen bevorzugt einen DACP-Wert von weniger als 0 °C, sehr bevorzugt von höchstens -20 °C, und/oder bevorzugt einen MMAP-Wert von weniger als 40 °C, sehr bevorzugt von höchstens 20 °C, auf. Zur Bestimmung von MMAPund DACP-Werte wird auf C. Donker, PSTC Annual Technical Seminar, Proceedings, S. 149-164, Mai 2001 verwiesen.

Die mit der Polyacrylat-Komponente im Wesentlichen nicht verträgliche Elastomer-Komponente (b) der vorteilhaften erfindungsgemäßen Klebemasse umfasst bevorzugt einen oder unabhängig voneinander gewählt mehrere Synthesekautschuke, sowie gegebenenfalls Harze und/oder andere Additive.

Bevorzugt für die Elastomer-Komponente werden Blockcopolymere eingesetzt. Erfindungsgemäß vorteilhaft sind die Synthesekautschuke insbesondere solche in Form thermoplastischer Blockcopolymere, deren Struktur durch eine der nachstehenden Formeln darstellbar ist:

$$(II) \qquad A\text{-}B$$

$$(III) \qquad A\text{-}B\text{-}X(A'\text{-}B')_n$$

wobei

- A bzw. A' ein Polymer ist gebildet durch Polymerisation eines Vinylaromaten, wie beispielweise Styrol oder $\alpha$-Methylstyrol,
- B bzw. B' ein Polymer ist aus einem Isopren, Butadien, einem Farnesen-Isomer oder einem Gemisch aus Butadien und Isopren oder einem Gemisch aus Butadien und Styrol, oder enthaltend vollständig oder teilweise Ethylen, Propylen, Butylen und/oder Isobutylen,
- X eine optionale Verknüpfungsgruppe (z. B. ein Rest eines Kopplungsreagenzes oder Intiators) ist,
- n eine ganze Zahl zwischen 1 und 4 ist
- (A'-B')n über A' (Struktur IIIa) oder B' (Struktur IIIb) mit X bzw. mit (A-B) verknüpft sein kann, bevorzugt über B'
- A von der Zusammensetzung und/oder Molmasse = A' sein kann und B von der Zusammensetzung und/oder Molmasse = B' sein kann.

Geeignete Vinylaromatenblockcopolymer umfassen einen oder mehrere gummiartige Blöcke B bzw. B' (Weichblöcke, Elastomerblöcke) und einen oder mehrere glasartige Blöcke A bzw. A'. In einigen Ausführungsformen umfasst das Blockcopolymer mindestens einen glasartigen Block. In einigen weiteren erfindungsgemäßen Ausführungsformen umfasst das Blockcopolymer zwischen einem und fünf glasartigen Blöcken.

In einigen vorteilhaften Ausführungsformen wird zusätzlich zu den Strukturen II, IIIa und/oder IIIb oder ausschließlich ein Blockcopolymer verwendet, welches ein Multiarm-Blockcopolymer ist. Dieses wird durch die allgemeine Formel

$$(IV) \qquad Q_m\text{-}Y$$

beschrieben, worin Q einen Arm des Multiarm-Blockcopolymers repräsentiert und m wiederum die Anzahl an Armen darstellt, wobei m eine ganze Zahl von mindestens 3 ist. Y ist der Rest eines Multifunktionsverknüpfungsreagenzes, das zum Beispiel einem Kopplungsreagenz oder einem multfunktionalen Initiator entstammt. Insbesondere hat jeder Arm Q unabhängig die Formel A*-B*, wobei A* und B* jeweils unabhängig zu den übrigen Armen entsprechend der vorstehenden Definitionen für A bzw. A' und B bzw. B' gewählt werden, so dass analog den Strukturen II, IIIa und IIIb jeweils A* einen glasartigen Block und B* einen Weichblock repräsentiert. Selbstverständlich ist es auch möglich, für mehrere Arme Q oder alle Arme Q identische A* und/oder identische B* zu wählen.

Die Blöcke A, A' und A* werden im Folgenden gemeinsam als A-Blöcke bezeichnet. Die Blöcke B, B' und B* werden im Folgenden entsprechend gemeinsam als B-Blöcke bezeichnet.

A-Blöcke sind generell glasartige Blöcke mit jeweils einer Glasübergangstemperatur (DDK, siehe unten), die oberhalb der Raumtemperatur (unter Raumtemperatur sei im Zusammenhang dieser Erfindung 23 °C verstanden) liegt. In einigen vorteilhaften Ausführungsformen liegt der Tg des glasartigen Blockes bei mindestens 40 °C, bevorzugt bei mindestens 60 °C, noch bevorzugter bei mindestens 80 °C oder sehr bevorzugt bei mindestens 100 °C.

Das Vinylaromatenblockcopolymer weist weiterhin generell einen oder mehrere gummiartige B-Blöcke bzw. [Weichblöcke oder Elastomerblöcke] mit einem Tg von kleiner als Raumtemperatur auf. In einigen Ausführungsformen ist der Tg des Weichblocks kleiner als -30 °C oder sogar kleiner als -60 °C.

Neben den für die Formeln II und IIIa/IIIb und IV genannten erfindungsgemäßen und besonders bevorzugten Monomeren für die B-Blöcke umfassen weitere vorteilhafte Ausführungsformen ein polymerisiertes konjugiertes Dien, ein hydriertes Derivat eines polymerisierten konjugierten Diens oder eine Kombinationen davon. In einigen Ausführungsformen umfassen die konjugierten Diene 4 bis 18 Kohlenstoffatome. Beispielhaft seien für weitere vorteilhafte konjugierte Diene für die gummiartigen B-Blöcke zusätzlich Ethylbutadien, Phenylbutadien, Piperylen, Pentadien, Hexadien, Ethylhexadien und Dimethylbutadien genannt, wobei die polymerisierten konjugierten Diene als Homopolymer oder als Copolymer vorliegen können.

Der Anteil an A-Blöcke bezogen auf die gesamten Blockcopolymere beträgt dabei im Mittel bevorzugt 10 - 40 Gew.-%, mehr bevorzugt 15 - 33 Gew.-%.

Bevorzugt als Polymer für A-Blöcke wird Polystyrol. Bevorzugt als Polymere für B-Blöcke wird Polybutadien, Polyisopren, Polyfarnesen und deren teil- oder vollhydrierten Derivate wie Polyethylenbutylen, Polyethylenpropylen, Polyethylenethylenpropylen oder Polybutylenbutadien oder Polyisobutylen. Sehr bevorzugt wird Polybutadien.

Gemische verschiedener Blockcopolymere können zum Einsatz kommen. Bevorzugt werden Triblockcopolymere ABA und/oder Diblockcopolymere AB eingesetzt. Blockcopolymere können linear, radial oder sternförmig (Multiarm) sein, auch unabhängig der Strukturen II und III.

Als elastomerverträgliche Harze lassen sich insbesondere vorteilhaft Kohlenwasserstoffharze einsetzen. Geeignete Klebharze für diese Harzklasse sind u.a. vorzugsweise hydrierte Polymerisate des Dicyclopentadiens, nicht hydrierte, partiell, selektiv oder vollständig hydrierte Kohlenwasserstoffharze auf Basis von C5-, C5/C9- oder C9-Monomerströmen, oder besonders bevorzugt Polyterpenharze auf Basis von $\alpha$-Pinen und/oder ß-Pinen und/oder $\delta$-Limonen. Vorgenannte Klebharze können sowohl allein als auch im Gemisch eingesetzt werden. Idealerweise ist es im Wesentlichen nicht verträglich mit den Acrylatpolymeren. Der aromatische Anteil sollte daher nicht zu hoch gewählt werden. Geeignete Klebharze dieser Harzklasse sind insbesondere mit dem Weichblock oder den Weichblöcken der Elastomer-Komponente kompatibel. Die mit den Synthesekautschuken verträglichen Kohlenwasserstoffharze der erfindungsgemäßen Haftklebemasse weisen bevorzugt einen DACP-Wert von mindestens 0 °C, sehr bevorzugt von mindestens 20 °C, und/oder bevorzugt einen MMAP-Wert von mindestens 40 °C °C, sehr bevorzugt von mindestens 60 °C, auf. Zur Bestimmung von MMAP- und DACP-Werten wird auf C. Donker, PSTC Annual Technical Seminar, Proceedings, S. 149-164, Mai 2001, verwiesen.

Auch die optional einsetzbaren Kohlenwasserstoffharze im Sinne dieser Schrift sind oligound polymere Verbindungen mit einer zahlenmittleren Molmasse Mn von typischerweise nicht mehr als 5.000 g/mol. Es können auch Kohlenwasserstoffharzgemische zum Einsatz kommen. Insbesondere hat der überwiegende Teil der Kohlenwasserstoffharze (bezogen auf den Gewichtsteil an der gesamten Kohlenwasserstoffharzmenge), bevorzugt haben alle Kohlenwasserstoffharze einen Erweichungspunkt von mindestens 80 °C und höchstens 150 °C (Ring-Kugel-Verfahren analog DIN EN 1427:2007, siehe unten). Zudem kann die Klebmasseformulierung auch Klebharze enthalten, die bei Raumtemperatur flüssig sind also einen Harzerweichungspunkt unterhalb 80 °C oder sogar unter 25 °C aufweisen.

Es ist auch denkbar, aromatische Kohlenwasserstoffharze einzusetzen, die mit den A-Blöcken kompatibel sind. Insbesondere solche Klebharze 2 können auch mit der Polyacrylat-Komponente (teil)-verträglich sein.

In einer vorteilhaften Variante der Erfindung werden zusätzlich zu polyacrylatverträglichen Klebharz(en) und/oder zusätzlich zu elastomerverträglichen Klebharz(en) oder alternativ zu diesen Klebharzen ein oder mehrere Klebharze eingesetzt, die mit beiden Komponeten verträglich oder die mit der einen Komponente verträglich und mit der anderen Komponente teilverträglich sind.

Beispielsweise können ein oder mehrere polyacrylatverträgliche Klebharze eingesetzt werden, die mit der Elastomer-Komponente zumindest teilverträglich sind oder vollständig mischbar sind. Werden als Elastomer-Komponente thermoplastische Blockcopolymere eingesetzt, wie weiter vorstehend beschrieben, so können die eingesetzten polyacrylatverträglichen Klebharze mit den A-Blöcken und/oder den B-Blöcken der Elastomer-Komponente zumindest teilverträglich, oder vollständig mischbar sein. Beispielsweise können auch ein- oder mehrere Klebharze eingesetzt werden, die mit der Elastomer-Komponente verträglich sind und mit der Polyacrylat-Komponente zumindest teilverträglich. Werden als Elastomer-Komponente thermoplastische Blockcopolymere eingesetzt, wie weiter vorstehend beschrieben, so können die eingesetzten poylacrylatverträglichen Klebharze mit den A-Blöcken und/oder den B-Blöcken der Elastomer-Komponente mischbar sein.

In sehr bevorzugter Vorgehensweise sind die Vernetzer der Komponente (c) in die Basiskomponente homogen einmischbar, gegebenenfalls nach vorheriger Lösung in geeigneten Lösemitteln.

Als kovalente Vernetzer (Komponente (c1)) für die vorliegende Erfindung werden in einer bevorzugten Ausführung der Erfindung Glycidylamine eingesetzt. Als erfindungsgemäß besonders bevorzugte Vertreter seien exemplarisch N,N,N',N'-Tetrakis(2,3-epoxypropyl)cyclohexane-1,3-dimethylamine und N,N,N',N'-tetrakis(2,3-epoxypropyl)-m-xylen-a,a'-diamin genannt.

Vorteilhaft können weiterhin mehrfachfunktionelle Epoxide, insbesondere Epoxycyclohexylcarboxylate als kovalente Vernetzer eingesetzt werden. Insbesondere 2,2-Bis(hydroxymethyl)-1,3-propanediol oder (3,4-Epoxycyclohexan)methyl-3,4-epoxycyclohexylcarboxylat seinen hier exemplarisch genannt.

Weiterhin können erfindungsgemäß multifunktionelle Aziridine eingesetzt. Hierzu sei beispielsweise Trimethylolpropane tris(2-methyl-1-aziridinepropionate) genannt.

Als kovalente Vernetzer werden in einer weiteren bevorzugten Ausführung der Erfindung Isocyanate eingesetzt, insbesondere multifunktionelle Isocyanatverbindungen. Als multifunktionelle Isocyanatverbindung können beispielsweise Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat eingesetzt werden. Sie können allein oder in einer Kombination von zwei oder mehr Arten davon verwendet werden.

Es wird erfindungsgemäß zumindest ein kovalenter Vernetzer eingesetzt, es können aber auch zwei oder mehrere kovalente Vernetzer zum Einsatz kommen, etwa beispielsweise die zwei vorgenannten Diamin-Verbindungen in Kombination miteinander.

Als koordinative Vernetzer (Komponente (c2)) für die vorliegende Erfindung kommen insbesondere Chelatverbindungen, insbesondere mehrwertige Metallchelatverbindungen in Frage. Unter dem Begriff "mehrwertige Metallchelatverbindung" werden solche Verbindungen verstanden, bei der ein mehrwertiges Metall koordinativ an eine oder mehrere organische Verbindungen gebunden ist. Als mehrwertiges Metallatom können Al(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(II) Sn(IV), Ti(IV) und dergleichen eingesetzt werden. Von diesen sind Al(III), Zr(IV) und Ti(IV) bevorzugt.

Als Liganden der koordinativen Vernetzer können grundsätzlich alle bekannten Liganden diesen. Die für die koordinative Bindung der organischen Verbindung genutzten Atome können aber insbesondere solche Atome sein, die feie Elektronenpaare aufweisen, wie beispielweise Sauerstoffatome, Schwefelatome, Stickstoffatome und dergleichen. Als organische Verbindung können beispielsweise Alkylester, Alkoholverbindungen, Carbonsäureverbindungen, Etherverbindungen, Ketonverbindungen und dergleichen genutzt werden. Insbesondere seien Titanchelatverbindungen wie Titandipropoxidbis(acetylacetonat), Titandibutoxidbis(octylenglycholat), Titandipropoxid-bis(ethylacetoacetat), Titandipropoxidbis(lactat), Titandipropoxidbis(triethanolaminat), Titandi-n-butoxidbis(triethanolaminat), Titantri-n-butoxidmonostearat, Butyltitanatdimer, Poly(titanacetylacetonat) und dergleichen; Aluminiumchelat- Verbindungen wie Aluminiumdiisopropoxidmonoethylacetat, Aluminiumdi-n-butoxidmonomethylacetoacetat, Aluminiumdi-i-butoxidmonomethylacetoacetat, Aluminiumdi-n-butoxidmonoethylaceto-acetat, Aluminiumdisec-butoxidmonoethylacetoacetat, Aluminiumtriacetylacetonat, Aluminiumtriethylacetoacetonat, Aluminiummonoacetylacetonatbis(ethylacetoacetonat) und dergleichen und Zirkoniumchelatverbindungen wie Zirkoniumtetraacetylacetonat und dergleichen veranschaulichend aufgeführt. Von diesen sind Aluminiumtriacetylacetonat und Aluminiumdipropoxid bevorzugt. Sie können allein oder in einer Kombination von zwei oder mehr Arten davon verwendet werden.

Kovalente Vernetzer werden in einer Gesamtmenge von 0,015 bis 0,04, bevorzugt 0,02 bis 0,035 Gewichtsteile, bezogen auf 100 Gewichtsteile der Basispolymerkomponente (a1) eingesetzt, bevorzugt in einer Menge von 0,03 Gew.%. Koordinative Vernetzer werden in einer Menge von 0,03 bis 0,15, bevorzugt 0,04 bis 0,1 Gewichtsteile bezogen auf 100 Gewichtsteile der Basispolymerkomponente (a1) eingesetzt.

Weiter werden kovalente Vernetzer und koordinative Vernetzer derart eingesetzt, dass die koordinativen Vernetzer im molaren Überschuss, bezogen auf die kovalenten Vernetzer, vorliegen. Die Vernetzer werden in den vorstehend genannten Mengen Bereichen eingesetzt, und zwar derart, dass das molare Verhältnis von kovalenten Vernetzern zu koordinativen Vernetzern - also das Verhältnis der eingesetzten Stoffmenge $n_{kov}$ der kovalenten Vernetzer zur eingesetzten Stoffmenge $n_{koord}$ der koordinativen Vernetzer - im Bereich von 1 : 1,3 bis 1 : 4,5 liegt, dementsprechend $1,3 \leq n_{koord}/n_{kov} \leq 4,5$. Sehr bevorzugt ist ein molares Verhältnis von kovalenten Vernetzern zu koordinativen Vernetzern von 1 : 2 bis 1 : 4.

Die Klebemasse, insbesondere Haftklebemasse, kann sich auf die vorgenannten Bestandteile (Basispolymer und Vernetzer) beschränken, sie kann neben dem Basispolymer und den Vernetzern jedoch auch weitere Bestandteile beinhalten, insbesondere die dem Fachmann grundsätzlich bekannten Beimischungen. Hierdurch können insbesondere gewünschte Eigenschaften der resultierenden Klebemasse, insbesondere Haftklebemasse, gezielt beeinflusst und eingestellt werden. Weitere Komponenten und/oder Additive können der Klebemasse jeweils allein oder in Kombination mit einem, zweien oder mehreren anderen Additiven oder Komponenten zugemischt werden.

In einer bevorzugten Vorgehensweise sind der Klebemasse Harze, wie Klebharze und/oder thermoplastische Harze, beigemischt. Die maximal zusetzbare Harzmenge wird dabei durch die Mischbarkeit mit den - gegebenenfalls mit weiteren Ausgangsstoffen abgemischten - Polymeren begrenzt; bevorzugt sollte sich zwischen Harz und Polymeren eine homogene Mischung ausbilden.

Als klebrigmachende Harze sind lassen sich die dem Fachmann grundsätzlich bekannten Klebharze einsetzbar. Genannt seien beispielsweise Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze, jeweils für sich oder in Kombination miteinander. Besonders vorteilhaft lassen sich alle mit der Polymermasse kompatiblen (in ihr löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Weiterhin können optional

- Weichmacher (Plastifizierungsmittel) - wie z.B. niedermolekulare Polyacrylate, Phthalate, wasserlösliche Weichmacher, Weichharze, Phosphate oder Polyphosphate -,
- funktionelle Additive, wie Initiatoren, Beschleuniger,
- elektrisch leitfähige Materialien, wie z.B. konjugierte Polymere, dotierte konjugierte Polymere, Metallpigmente, Metallpartikel, Metallsalze, metallbeschichtete Partikeln - z.B. silberbeschichtete Kugeln -, Graphit, Leitruße, Kohlenstoffasern, ferromagnetische Additive, etc.,
- Schäumungsmittel, Blähmittel, expandierbare Hohlkugeln,
- schwerentflammbare Füllstoffe - wie beispielsweise Ammoniumpolyphosphat -,
- Compoundierungsmittel, Keimbildner
- Alterungsschutzmittel - z.B. in Form von primären und sekundären Antioxidantien -, Lichtschutzmittel, Ozonschutzmittel,
- pulver- und granulatförmige Füllstoffe, Farbstoffe und Pigmente - wie. z. B. Fasern, Ruße, Zinkoxide, Titandioxide, Kreiden ($CaCO_3$), Kieselsäuren, Silikate, Voll- oder Hohlglaskugeln, Voll- oder Hohlpolymerkugeln, keramische Voll- oder Hohlkugeln, Mikrokugeln aus anderen Materialien,
- organische Füllstoffe

allein oder in beliebiger Kombination zweier oder mehrerer Additive zugesetzt sein.

Die Polymere werden insbesondere durch radikalische Polymerisation hergestellt, vorzugsweise in Lösung. Nach der Polymerisation wird bevorzugt derart vorgegangen, dass das Lösungsmittel aus dem Polymerisationsprodukt entfernt wird. Die Vernetzer und/oder die übrigen Zusatzstoffe können vor oder nach der Entfernung des Lösemittels zugesetzt werden, bevorzugt geschieht dies noch in der Lösungsphase.

Der Restlösungsmittelanteil soll auf einen Anteil von nicht mehr als 5 Gew.-%, insbesondere nicht mehr als 2 Gew.-%, ganz besonders nicht mehr als 0,5 Gew.-%, bezogen auf die nach Entfernung des Lösungsmittels verbleibende Mischung, gesenkt werden. Bevorzugt wird ein lösemittelfreies System angestrebt.

Das entfernte Lösungsmittel wird in bevorzugter Vorgehensweise einem Recyclingprozess zugeführt. Das Lösungsmittel, was zur Herstellung der Reaktionslösung eingesetzt wird, kann ganz oder teilweise einem Recyclingprozess entnommen werden. Insbesondere vorteilhaft wird das Lösungsmittel ganz oder teilweise im Kreis geführt, das heißt das entfernte Lösungsmittel nach einer Polymerisation wird ganz oder teilweise zur Herstellung einer Reaktionslösung für eine weitere Polymerisation eingesetzt.

Die Erfindung betrifft weiterhin eine vernetzte Haftklebemasse, erhältlich durch Vernetzung einer vernetzbaren erfindungsgemäßen Klebemasse, wie sie vorstehend dargestellt wurde. Die Vernetzung findet dabei bevorzugt an einer zur Schicht beziehungsweise zum Film ausgebildeten Haftklebemasse statt.

Die Vernetzungsreaktion kann dabei insbesondere wie folgt ablaufen:

In einer vorteilhaften Vorgehensweise werden die beiden Substanzen als Reinstoff oder in einem geeigneten Lösemittel vorgelöst zu dem in Lösung vorliegenden Polymer gegeben, dann das Polymer mit den Vernetzern gut durchgemischt, auf einen temporären oder permanenten Träger mit den üblichen Beschichtungsverfahren beschichtet und dann unter geeigneten Bedingungen getrocknet (das Lösemittel entfernt), wobei die Vernetzung stattfindet.

In einer optionalen, insbesondere für sehr reaktive Systeme geeigneten Vorgehensweise wird zunächst einer der Vernetzer in Reinform oder vorgelöst zu der Polymerlösung gegeben. Der zweite Vernetzer wird erst kurz vor der Beschichtung zugeführt, zum Beispiel über eine Inline-Dosierung mit nachgeschaltetem aktiven oder statischem Mischer und anschließender Beschichtung und Trocknung.

Die Topfzeit (Verarbeitungszeit) der koordinativen Vernetzer kann durch Zugabe der zuvor beschriebenen Liganden zu der Polymer-Vernetzer-Lösung erhöht werden. Der Ligandenüberschuss wird dann bei der Trocknung entfernt; erst ab dann sind die koordinativen Vernetzer (voll) reaktiv.

Die Trocknungsbedingungen (Temperatur und Verweilzeit) werden sehr bevorzugt so gewählt, dass nicht nur das Lösungsmittel entfernt wird, sondern auch die Vernetzung auch zu einem Großteil abgeschlossen ist, so dass ein stabiles Vernetzungsniveau - insbesondere bei höheren Temperaturen - erreicht wird. Insbesondere wird die Klebemasse vollständig vernetzt.

Unter vollständiger Vernetzung einer Klebemasse wird erfindungsgemäß verstanden, dass deren maximale Scherstrecke "max" im Mikroscherweg-Test (Methode D; siehe experimeteller Teil dieser Schrift) bei den dort genannten Bedingungen bei wiederholter (beispielsweise täglicher) Mikroscherweg-Messung innerhalb einer Periode von 48 Stunden nur im Rahmen der Genauigkeit der Messmethode (etwa bis zu maximal 5 %) ändert, wenn die Klebmasse bei Raumtemperatrur (23 °C) bei ansonsten Normbedingungen gelagert wird.

Der Nachweis der vollständigen Vernetzung kann je nach Anwendungsgebiet der Klebemasse auch für andere Temperaturen (z.B. 40 °C, insbesondere solchen Temperaturen, die den jeweiligen Anwendungstemperaturen entsprechen) durchgeführt werden.

Die Erfindung betrifft weiterhin Klebebänder und Klebefolien, umfassend zumindest eine Schicht einer erfindungsgemäßen Haftklebemasse, insbesondere einer erfindungsgemäßen vernetzten Haftklebemasse. Als Klebebänder kommen dabei einseitig Klebebände in Frage, bei denen die Schicht aus der erfindungsgemäßen Haftklebemasse insbesondere auf einer Seite einer Trägerschicht vorgesehen ist (mit direktem Kontakt oder indirket), sowie doppelseitig klebende Klebebänder, bei denen auf den zwei Seiten einer Trägerschicht jeweils in direktem Kontakt oder indirekt eine Schicht einer Haftklebemasse vorgesehen ist. Zumindest einer der Klebemassenschichten eines doppelseitigen erfindungsgemäßen Klebebandes ist dann eine erfindungsgemäße Haftklebemasse, es können auch beide Klebemassenschichten des erfindungsgemäßen doppelseitigen Klebebandes erfindungsgemäße Klebemassen sein, die ihrerseits wieder identisch oder unterschiedlich, etwa in ihrer Dicke oder konkreten chemischen Zusammensetzung, sein können. Ein- oder doppelseitige Klebebänder können weitere Schichten aufweisen, wie dies aus dem Stand der Technik grundsätzlich bekannt ist.

Auch ein trägerloses Klebeband, welches lediglich aus der Schicht der erfindungsgemäßen Haftklebemasse und ggf. temporär aufgebrachten Abdeckmaterialien, die für die Anwendung wieder entfernt werden, besteht, wird von der Erfindung umfasst.

Die erfindungsgemäßen Klebeprodukte finden eine Vielzahl von Anwendungen, so zum Beispiel in der Bauindustrie, in der Elektronikindustrie, im Heimwerkerbereich, in der Autoindustrie, im Schiffs-, Boots- und Eisenbahnbau, für Haushaltsgeräte, Möbel und dergleichen. Vorteilhafte Anwendungen sind beispielsweise das Verkleben von Leisten und Emblemen in den vorgenannten Bereichen, das Verkleben von Versteifungsprofilen bei Fahrstühlen, das Verkleben von Bauteilen und Produkten in der Solarindustrie, die Rahmenverklebung bei elektronischen Konsumgütern, wie Fernsehern und dergleichen, Verklebungen bei der Schilderherstellung.

Die erfindungsgemäße Klebemasse und die erfindungsgemäßen Klebebänder eignen sich hervorragend zum Verkleben flexibler Druckplatten auf gekrümmten Oberflächen. Im Flexodruckverfahren werden flexible Druckplatten (auch als Klischees bezeichnet) auf Druckzylinder oder Druckhülsen verklebt. Derartige Klischees bestehen beispielsweise aus einer Polyethylenterephthalat-Folie (PET-Folie), auf die eine Schicht eines Fotopolymers aufgebracht ist, in die durch Belichtung das entsprechende Druckrelief eingebracht werden kann. Die Verklebung des Klischees auf dem Druckzylinder bzw. der Druckhülse erfolgt dann über die PET-Folie.

Die erfindungsgemäßen Haftklebebänder erfüllen hervorragend die sehr hohen Anforderungen in diesem Bereich. Für den Druckprozess muss das Haftklebeband eine bestimmte Härte, aber auch eine bestimmte Elastizität aufweisen Zudem sollte die Klebkraft ausreichend sein, damit sich die Druckplatte nicht von dem doppelseitigen Haftklebeband oder das Haftklebeband vom Zylinder bzw. der Hülse ablöst. Dies gilt beispielsweise auch bei erhöhten Temperaturen von 40 bis 60 °C und bei höheren Druckgeschwindigkeiten. Neben dieser Eigenschaft soll die Haftklebemasse aber auch reversible Hafteigenschaften besitzen, um die Druckplatten nach den Druckvorgängen wieder ablösen zu können (dabei muss sowohl die Klebeverbindung des Haftklebebandes zum Druckzylinder bzw. zur Druckhülse als auch die zum Klischee rückstandsfrei zu lösen sein, um eine Wiederverwendbarkeit beider Komponenten zu gewährleisten). Diese Ablösbarkeit sollte auch nach einer Verklebung über einen längeren Zeitraum (bis zu 6 Monate) gegeben sein. Zudem ist es erwünscht, dass sich das Haftklebeband und insbesondere die Druckplatte ohne Zerstörung dieser, d. h. ohne großen Kraftaufwand wieder entfernen lässt, da die Druckplatten in der Regel mehrfach eingesetzt werden. Zudem sollten keine Rückstände auf der Druckplatte und auf dem Zylinder bzw. der Hülse verbleiben. Zusammenfassend werden somit sehr hohe Anforderungen an die für diesen Einsatz geeigneten doppelseitigen Haftklebebänder gestellt, die von der erfindungsgemäßen Haftklebemasse hervorragend erfüllt werden.

In vorteilhafter Weise kann die Klebemasse zum Verkleben von Bauteilen feinmechanischer, optischer, elektrischer und/oder elektronischer Geräte eingesetzt werden, zum Beispiel bei deren Herstellung, Reparatur, Verzierung oder dergleichen. Dabei können beispielsweise Materialien wie Kunststoffe, Gläser, Metalle und dergleichen zur Verklebung kommen.

Die Klebemasse eignet sich insbesondere auch zur permanenten Verklebung von flexiblen Materialien, insbesondere bei der Herstellung flexibler Displays. Solche Displays nehmen an Bedeutung zu.

In vorteilhafter Weise kann die Klebemasse zum Verkleben von Fenstern oder Linsen in Gehäusen feinmechanischer, optischer und/oder elektronischer Geräte (sogenanntes "Lens Mounting") eingesetzt werden. Dabei ist zumindest eines der starren oder flexiblen Substrate durchsichtig (transparent) oder durchscheinend (transluzent). Das durchsichtige beziehungsweise durchscheinende Substrat kann beispielweise ein Fenster oder eine optische Linse zum Zwecke des Schutzes darunter angeordneter empfindlicher Komponenten - solche Komponenten können beispielweise Flüssigkristallanzeigen (LCD), Leuchtdioden (LED) oder organische Leuchtdioden (OLED) von Displays, aber auch gedruckte Schaltungen oder andere empfindliche elektronische Bauteile sein; dies spielt beispielsweise bei der Anwendung für berührungsempfindliche Displays eine große Rolle - und/oder zur Bewirkung optischer Effekte für die Funktion des Gerätes - zum Beispiel Lichtbrechung, Lichtbündelung, Lichtabschwächung, Lichtverstärkung usw. - sein.

Sehr vorteilhaft wird das transparente Substrat derart gewählt, dass es einen Haze-Wert von höchstens 50 %, bevorzugt von nicht mehr als 10 %, sehr bevorzugt von nicht mehr als 5 % (gemessen nach ASTM D 1003) aufweist.

Das zweite Substrat ist vorzugsweise ebenfalls ein Bauteil eines feinmechanischen, optischen und/oder elektronischen Gerätes. Insbesondere ist hier an Gehäuse solcher Geräte oder an Halterungen für wie vorstehend beschriebene Fenster bzw. Linsen zu denken.

In einer bevorzugten Vorgehensweise ist das durchsichtige bzw. durchscheinende Substrat ein Substrat aus Glas, Polymethylmethacrylat und/oder Polycarbonat. Insbesondere kann das zweite Substrat aus Kunststoffen wie Acrylnitril-Butadien-Styrol-Copolymeren (ABS), Polyamid oder Polycarbonat bestehen, die insbesondere auch glasfaserverstärkt sein können; oder aus Metallen, wie Aluminium - auch anodisiertes (eloxiertes) Aluminium - oder Magnesium und Metalllegierungen

Auch den Substrat-Materialien können Additive, wie beispielsweise Farbstoffe, Lichtschutzmittel, Alterungsschutzmittel, Weichmacher oder dergleichen beigemischt sein, sofern dies für den beabsichtigten Einsatzzweck vorteilhaft ist; bei durchsichtigen oder durchscheinenden Materialien insbesondere in soweit, als es diese optischen Eigenschaften nicht oder nur in vertretbarem Maße stört.

Erfindungsgemäß ist der erfindungsgemäße Verbund somit ein Bauteil eines elektronischen, optischen oder feinmechanischen Geräts.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und -instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielsweise Fernseher und dergleichen
- Akustische Aufzeichnungs-, Verarbeitungs-, -übertragungs- und -wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielsweise Telefone, Anrufbeantworter
- Chemische und physikalische Messgeräte, Steuergeräte und Instrumente, wie beispielsweise Akkumulatorladege-

räte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technischen Entwicklung richtet sich vermehrt auf solche Geräten, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden. Die erfindungsgemäß verwendete Klebemasse hat sich als besonders bevorzugt herausgestellt, solche Störeinflüsse zu überstehen und im Idealfall auch abzuschwächen oder zu kompensieren. Nachfolgend sind einige portable Geräte besipeilhaft aufgeführt.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Des Weiteren sind die mit der erfindungsgemäßen Klebemasse ausgerüsteten Klebebänder vorteilhaft zum Ummanteln von langgestrecktem Gut wie insbesondere Kabelsätze in Kraftfahrzeugen geeignet, wobei das Klebeband in einer Schraubenlinie um das langgestreckte Gut geführt oder das langgestreckte Gut in axialer Richtung von dem Band umhüllt werden kann. Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich. Ein derartiges Produkt sowie optimierte Ausführungsformen desselben werden in der EP 1 312 097 A1 offenbart. In der EP 1 300 452 A2, der DE 102 29 527 A1 sowie der WO 2006 108 871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart. Schließlich beschreiben die EP 1 315 781 A1 sowie die DE 103 29 994 A1 Ausführungsformen von Klebebändern, wie sie auch für das erfindungsgemäße Klebeband möglich sind.

Weiter vorzugsweise zerstört das Klebeband bei Verklebung auf Kabeln mit PVC-Ummantelung und auf Kabeln mit Polyolefin-Ummantelung dieselbigen nicht, wenn ein Verbund aus Kabeln und Klebeband gemäß der LV 312 bei Temperaturen über 100 °C und bis zu 3000 h gelagert und anschließend die Kabel um einen Dorn gebogen werden. Das erfindungsgemäße Klebeband eignet sich hervorragend für das Umwickeln von Kabeln, lässt sich für eine einfache Verarbeitung leicht abwickeln, zeigt kein oder nur geringfügiges Abflaggen und zeigt keine Kabelversprödung auch bei den hohen Temperaturklassen T3 und T4 über 3000 h.

**Experimenteller Teil**

*Prüfmethoden*

Als Klebebandmuster kamen doppelseitig klebende Prototypen zum Einsatz enthaltend eine 12 $\mu$m Polyesterfolie, die beidseitig mit jeweils einer 50 $\mu$m dicken Haftklebeschicht ausgestattet war.

Gelpermeationschromatographie GPC (Methode A)

Die Angaben der zahlenmittleren und gewichtsmittleren Molekulargewichte $M_n$ und $M_w$ sowie der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$m, $10^3$ Å, ID 8,0 mm · 50 mm verwendet. Zur Auftrennung werden die Säulen des Typs PSS-SDV, 5 $\mu$m, $10^3$ Å sowie $10^5$Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung) im Falle der Kammpolymere und PS-Standards (Polystyrolkalibrierung) im Falle der Kohlenwasserstoffharze.

180° Klebkrafttest (Methode B):

Die Bestimmung der Klebkraft Stahl erfolgt bei einem Prüfklima von 23 °C +/- 1 °C Temperatur und 50 % +/- 5 % rel. Luftfeuchte.
Ein 20 mm breiter Streifen des Klebebandmusters wurde auf Stahlplatten aufgebracht, die zuvor zweimal mit Aceton sowie einmal mit Isopropanol gewaschen wurden und danach 5 Minuten an der Luft liegen gelassen, damit das Lösungsmittel abdampfen kann. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.
Die Messergebnisse sind in N/cm angegeben und sind gemittelt aus drei Messungen.

*Reworkability (Methode C)*

Das zu prüfende Klebeband wird als 20 mm x 150 mm Streifen auf einer seiner Klebemassenseiten mit einer 36 $\mu$m dicken geätzten PET-Folie abgedeckt. Der Streifen wird der anderen Klebemassenseite auf eine konditionierte Polycarbonat-Platte verklebt und mit einer 4kg-Rolle 1mal hin- und her überrollt. Der Verbund wird für 3 Tage bei 40 °C gelagert.
Nach 3 Tagen werden die Muster entnommen, mindestens 2 Stunden lang bei Raumtemperatur (RT) konditioniert und manuell abgezogen. Der Test erfolgt unter einem Abzugswinkel von 90 ° und es wird bewertet, in welcher Weise das Klebeband bei langsamer Abzugsgeschwindigkeit von 0,1 mm/min versagt. Dabei bedeuten:

A: adhäsives Versagen (vorteilhaft; erfindungsgemäß positiver Testausgang)
K: kohäsives Versagen (nicht vorteilhaft, erfindungsgemäß negativer Testausgang)
MB: Mischbruch (nicht vorteilhaft; erfindungsgemäß negativer Testausgang)

Mikroschertest (Methode D)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13 mm · 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 300 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)· 100 / max].

Name-Pate-Test (NPT) (Methode E)

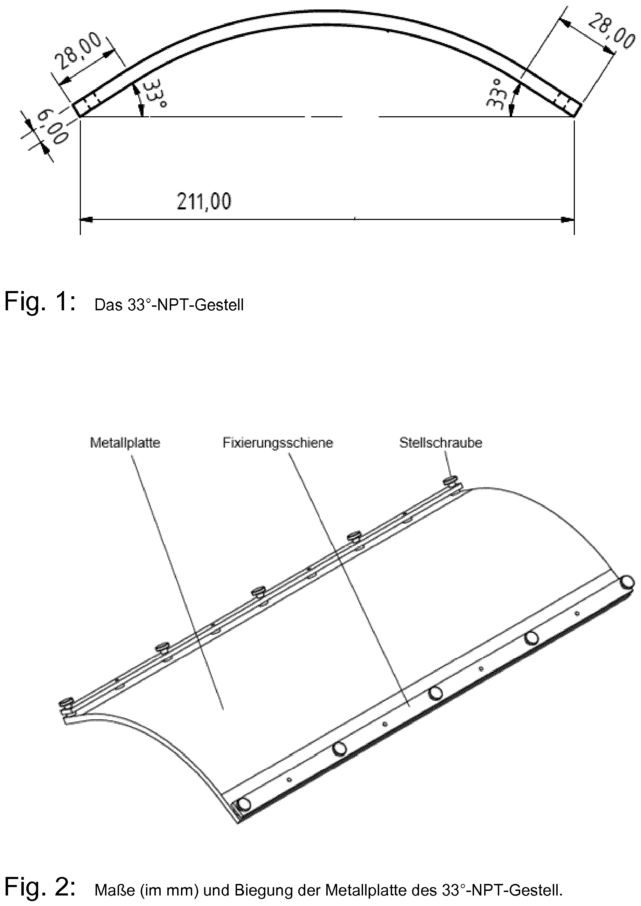

Ein 2 cm breiter, 15 cm langer und 0,5 mm dicker Aluminium-Teststreifen wird mit Aceton gewaschen und bei einem Klima von 23 °C +/- 1 °C Temperatur und 50 % +/- 5 % rel. Luftfeuchte 5 min liegen gelassen. Der Aluminuim-Streifen wird anschließend längs auf das Klebebandmusters aufgebracht. Anschließend wird überstehendes Klebeband abgeschnitten, so dass das es bündig mit der Aluminium-Platte abschließt. Eine 20 cm lange, 2,5 cm breite und 3 mm dicke Polycarbonat-Platte (PC-Platte) wird mit Ethanol gewaschen und bei einem Klima von 23 °C +/- 1 °C Temperatur und 50 % +/- 5 % rel. Luftfeuchte 120 min liegen gelassen. Der Verbund aus der Aluminium-Platte und dem Klebeband wird mittig auf der PC-Platte verklebt und somit das Prüfmuster hergestellt. Durch fünfmaliges doppeltes Überrollen mittels einer 4 kg Rolle und anschließendes liegen lassen für 72h wird für eine definierte Verklebung gesorgt. Die PC-Platte wird in ein 33°-NPT-Gestell (Figuren 1 und 2) gespannt, so dass die Enden der PC-Platte mit der Fixierungsschiene bündig auf dem Gestell fixiert wird, und die verklebte Aluminiumplatte sichtbar nach oben gerichtet ohne Fixierung vorliegt. Das Gestell wird mit dem in einen Ofen bei 50°C eingelagert. Nach 48 h wird der jeweils Abstand beider 2 cm breiten Enden des Aluminium-Teststreifens im 90°-Winkel zu der PC-Platte gemessen. Das Messergebnis ist die Summe beider gemessener Abstände und wird in mm angegeben. Es wird eine Doppelbestimmung durchgeführt und der Durchschnitt berechnet.

Die Messergebnisse werden wie folgt interpretiert:

≤ 5 mm: vorteilhaft

< 10 mm: noch befriedigend

≥ 10 mm: nicht vorteilhaft

*Beispiele*

Charakterisierung der eingesetzten kommerziell erhältlichen Chemikalien:

Vernetzer:

| | |
|---|---|
| Erisys GA 240 : | N,N,N',N'-Tetrakis(2,3-epoxypropyl)-m-xylen-a,a'-diamin Firma Emerald Performance Materials |
| S-610: | N,N,N',N'-Tetrakis(2,3-epoxypropyl)cylohexane-1,3-dimethylamine Firma: Synasia Industry&Trade Co |
| Al-Chelat: | Al-(III)-acetylacetonat Firma Sigma Aldrich |
| Kautschuk: | Kraton D 1118: Diblock/Triblock 78/22; Polystyrolgehalt ca 33 %; Brookfield-Viskosität (25 °C, 25 % in Toluol) -0,6 Pa·s; Triblock lineares SBS Firma Kraton Polymers |

Harze:

| Dertophene T: | Terpenphenolharz, Erweichungspunkt ca. 95 °C; Mw ~ 500 - 800 g/mol; Hydroxylwert 20 - 50 mg KOH/g Firma DRT |
| Dertophene T 110: | Terpenphenolharz, Erweichungspunkt ca. 110 °C; Mw ~ 500 - 800 g/mol; Hydroxylwert 40 - 60 mg KOH/g Firma DRT |

Sofern im Einzelnen nicht anders angegeben, handelt es sich bei allen Prozentangaben im Folgenden um Gewichtsprozent.

Mengenangaben zur Zusammensetzung der Klebemasse aus der Polyacrylatkomponente, der gegebenenfalls vorhandenen Kautschuk-Komponente und/oder den gegebenenfalls vorhandenen Harzen sind bezogen auf 100 Gew-% der insgesamt durch diese Komponenten zusammengesetzten Klebemasse.

Mengenangaben zum Vernetzer sind angegeben in Gewichtsteilen (GT), bezogen jeweils auf 100 Gewichtsteile der reinen Polyacrylat-Komponente.

**Beispiel 1**

Herstellung des Polyacrylats I

Ein für radikalische Polymerisationen konventioneller 300 L-Reaktor wurde mit 2,0 kg Acrylsäure, 30,0 kg Isobornylacrylat (BA), 68,0 kg 2-Ethylhexylacrylat (EHA) sowie 72,4 kg Benzin/Aceton (70:30) befüllt. Nach 45minütiger Durchleitung von Stickstoffgas unter Rühren wurde der Reaktor auf 58 °C hochgeheizt und 50 g Vazo® 67 hinzugegeben. Anschließend wurde die Manteltemperatur auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Molmassen mittels GPC (Messmethode A): $M_n$ = 62.800 g/mol; $M_w$ = 852.600 g/mol. K-Wert: 62,5. Schließlich wurde die Vernetzerlösung (3 Gew.-% in Aceton) zugegeben und mittels eines Streichrakels auf einem Laborstreichtisch auf einem silikonisiertes Trennpapier beschichtet. Die Beschichtungen wurden anschließend bei 120 °C für 15 min getrocknet. Die Klebeschichten mit einem Schichtdicke von 50 μm wurden auf eine 12 μm PET-Folie kaschiert, so dass ein doppelseitiges Klebebandmuster resultierte. Die Muster wurde eine Woche bei Normklima (23 °C, 50 % relative Feuchte) konditioniert.

Der Acrylatanteil lag bei 100 % (Rein-Polyacrylat-System) und es wurde mit Erisys GA240 (0,02 GT bezogen auf 100 GT Polyacrylat) vernetzt.

**Beispiel 2**

Es wurde analog Beispiel 1 vorgegangen. Der Acrylatanteil lag bei 100% und es wurde mit Erisys GA 240 (0,03 GT bezogen auf 100 GT Polyacrylat) vernetzt.

**Beispiel 3**

Es wurde analog Beispiel 1 vorgegangen. Der Acrylatanteil lag bei 100% und es wurde mit Erisys GA 240 (0,04 GT bezogen auf 100 GT Polyacrylat) vernetzt.

**Beispiel 4**

Es wurde analog Beispiel 1 vorgegangen. Der Acrylatanteil lag bei 100% und es wurde mit Erisys GA 240 (0,05 GT bezogen auf 100 GT Polyacrylat) vernetzt.

**Beispiel 5**

Es wurde analog Beispiel 1 vorgegangen. Der Acrylatanteil lag bei 100% und es wurde mit Al-Chelat (0,1 GT bezogen auf 100 GT Polyacrylat) vernetzt.

**Beispiel 6**

Es wurde analog Beispiel 1 vorgegangen. Der Acrylatanteil lag bei 100% und es wurde mit Al-Chelat (0,2 GT

17

bezogen auf 100 GT Polyacrylat) vernetzt.

**Beispiel 7**

Es wurde analog Beispiel 1 vorgegangen. Der Acrylatanteil lag bei 100% und es wurde mit Al-Chelat (0,3 GT bezogen auf 100 GT Polyacrylat) vernetzt.

**Beispiel 8**

Es wurde analog Beispiel 1 vorgegangen. Der Acrylatanteil lag bei 100% und es wurde mit Al-Chelat (0,4 GT bezogen auf 100 GT Polyacrylat) vernetzt.

**Beispiel 9**

Es wurde analog Beispiel 1 vorgegangen. Der Acrylatanteil lag bei 100% und es wurde mit 0,04 GT Erisys GA 240 und 0,15 GT Al-Chelat (bezogen auf 100 GT Polyacrylat) vernetzt.

**Beispiel 10**

Es wurde analog Beispiel 1 vorgegangen. Der Acrylatanteil lag bei 100% und es wurde mit 0,03 GT Erisys GA 240 und 0,02 GT Al-Chelat (bezogen auf 100 GT Polyacrylat) vernetzt.

**Beispiel 11**

Es wurde analog Beispiel 1 vorgegangen. Der Acrylatanteil lag bei 100% und es wurde mit 0,03 GT Erisys GA 240 und 0,055 GT Al-Chelat (bezogen auf 100 GT Polyacrylat) vernetzt.

**Beispiel 12**

Es wurde analog Beispiel 1 vorgegangen. Der Acrylatanteil lag bei 100% und es wurde mit 0,025 GT Erisys GA 240 und 0,05 GT Al-Chelat (bezogen auf 100 GT Polyacrylat) vernetzt.

**Beispiel 13**

Es wurde analog Beispiel 1 vorgegangen. Der Acrylatanteil lag bei 100% und es wurde mit 0,03 GT Erisys GA 240 und 0,075 GT Al-Chelat (bezogen auf 100 GT Polyacrylat) vernetzt.

**Beispiel 14**

Es wurde analog Beispiel 1 vorgegangen. Der Acrylatanteil lag bei 100% und es wurde mit 0,02 GT Erisys GA 240 und 0,075 GT Al-Chelat (bezogen auf 100 GT Polyacrylat) vernetzt.

**Beispiel 15**

Herstellung des Polyacrylats II

Ein für radikalische Polymerisationen unter Siedekühlung geeigneter konventioneller 2 L-Glasreaktor wurde mit 300 g einer Monomermischung, enthaltend 142,5 g Butylacrylat, 142,5 g Ethylhexylacrylat und 15 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt. Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt. Molmassen mittels GPC (Messmethode A): Mn = 98000 g/mol, Mw = 1100000 g/mol) Der wie vorstehend beschrieben erhaltenen Polyacrylat-Lösung (Polyacrylat: 47,5 % 2-Ethylhexylacrylat, 47,5 % n-Butylacrylat, 5 % Acrylsäure, Mn = 98000 g/mol, Mw = 1100000 g/mol) wurde die gewünschte Harzmenge zugegeben und so mit einem Lösungsmittelgemisch Benzin : Aceton 70 : 30 verdünnt, dass ein Endfeststoffgehalt von 35 Gew.-% resultierte und für 12 h auf einer Rollbank gelöst. Schließlich wurde die Vernetzerlösung (3 Gew.-% in Aceton) zugegeben und mittels eines Streichrakels auf einem Laborstreichtisch auf einem silikonisiertes Trennpapier beschichtet. Die Beschichtungen wurden anschließend bei 120 °C für 15 min getrocknet. Die Klebeschichten mit einem Schichtdicke von 50 μm wurden auf eine 12μm PET-Folie kaschiert, so dass ein doppelseitiges Klebebandmuster resultierte. Die Muster wurde eine Woche bei Normklima (23 °C, 50 % relative Feuchte) konditioniert.

Der Acrylatanteil lag bei 60 % (bezogen auf die Zusammensetzung der klebemassen-Komponenten, siehe oben) und es wurde mit Erisys GA 240 (0,03 GT bezogen auf 100 GT Polyacrylat) vernetzt. Als Harzkomponente wurde Dertophene T zu 40 % (bezogen auf die Zusammensetzung der klebemassen-Komponenten, siehe oben) eingesetzt.

**Beispiel 16**

Es wurde analog Beispiel 15 vorgegangen. Der Acrylatanteil lag bei 60% und die Harzkomponente betrug 40%. Es wurde mit 0,04 GT Erisys GA 240 (bezogen auf 100 GT Polyacrylat) vernetzt.

**Beispiel 17**

Es wurde analog Beispiel 15 vorgegangen. Der Acrylatanteil lag bei 60% und die Harzkomponente betrug 40%. Es wurde mit 0,05 GT Erisys GA 240 (bezogen auf 100 GT Polyacrylat) vernetzt.

**Beispiel 18**

Es wurde analog Beispiel 15 vorgegangen. Der Acrylatanteil lag bei 60% und die Harzkomponente betrug 40%. Es wurde mit 0,2 GT Al-Chelat (bezogen auf 100 GT Polyacrylat) vernetzt.

**Beispiel 19**

Es wurde analog Beispiel 15 vorgegangen. Der Acrylatanteil lag bei 60% und die Harzkomponente betrug 40%. Es wurde mit 0,3 GT Al-Chelat (bezogen auf 100 GT Polyacrylat) vernetzt.

**Beispiel 20**

Es wurde analog Beispiel 15 vorgegangen. Der Acrylatanteil lag bei 60% und die Harzkomponente betrug 40%. Es wurde mit 0,04 GT Erisys GA 240 und 0,05 GT Al-Chelat (bezogen auf 100 GT Polyacrylat) vernetzt.

**Beispiel 21**

Es wurde analog Beispiel 15 vorgegangen. Der Acrylatanteil lag bei 60% und die Harzkomponente betrug 40%. Es wurde mit 0,035 GT Erisys GA 240 und 0,075 GT Al-Chelat (bezogen auf 100 GT Polyacrylat) vernetzt.

**Beispiel 22**

Es wurde analog Beispiel 15 vorgegangen. Der Acrylatanteil lag bei 60% und die Harzkomponente betrug 40%. Es wurde mit 0,035 GT Erisys GA 240 und 0,01 GT Al-Chelat (bezogen auf 100 GT Polyacrylat) vernetzt.

**Beispiel 23**

Es wurde analog Beispiel 15 vorgegangen. Der Acrylatanteil lag bei 60% und die Harzkomponente betrug 40%. Es wurde mit 0,02 GT Erisys GA 240 und 0,15 GT Al-Chelat (bezogen auf 100 GT Polyacrylat) vernetzt.

**Beispiel 24**

Herstellung des Polyacrylats II

Ein für radikalische Polymerisationen unter Siedekühlung geeigneter konventioneller 2 L-Glasreaktor wurde mit 300 g einer Monomermischung, enthaltend 142,5 g Butylacrylat, 142,5 g Ethylhexylacrylat und 15 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt. Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt. Molmassen mittels GPC (Messmethode A): Mn = 98000 g/mol, Mw = 1100000 g/mol) Die zumindest zweiphasige Klebemasse wurde folgendermaßen hergestellt: Zunächst wurde eine Stammlösung des Synthesekautschuks angesetzt. Der Feststoffgehalt betrug 35 Gew.-%, als Lösungsmittelgemisch wurde Siedegrenzenbenzin 60/95 : Aceton 70 :30 eingesetzt (Siedegrenzbenzin 60/95 im Folgenden einfach als "Benzin" bezeichnet). Der gewünschte Anteil Stammlösung wurde einer Polyacrylat-Lösung zugesetzt. Der wie vorstehend beschrieben erhaltenen Polyacrylat-Lösung (Polyacrylat: 47,5 % 2-Ethylhexylacrylat, 47,5 % n-Butylacrylat, 5 % Acrylsäure, Mn = 98000 g/mol, Mw = 1100000 g/mol) wurde die gewünschte Harzmenge zugegeben und so mit einem Lösungsmittelgemisch Benzin : Aceton 70 : 30 verdünnt, dass ein Endfeststoffgehalt von 35 Gew.-% resultierte und für 12 h auf einer Rollbank gelöst. Schließlich wurde die Vernetzerlösung (3 Gew.-% in Aceton) zugegeben und mittels eines Streichrakels auf einem Laborstreichtisch auf einem silikonisiertes Trennpapier beschichtet. Die Beschichtungen wurden anschließend bei 120 °C für 15 min getrocknet. Die Klebeschichten mit einem Schichtdicke von 46 μm wurden auf eine 12μm PET-Folie kaschiert, so dass ein doppelseitiges Klebebandmuster resultierte. Die Muster wurde eine Woche bei Normklima (23 °C, 50 % relative Feuchte) konditioniert.

Der Acrylatanteil lag bei 42,5 % (bezogen auf die Zusammensetzung der klebemassen-Komponenten, siehe oben) und es wurde mit Al-Chelat (0,1 GT bezogen auf 100 GT Polyacrylat) vernetzt. Als zweite Polymerkomponente wurde Kraton D1118 zu 20 % (bezogen auf die Zusammensetzung der klebemassen-Komponenten, siehe oben) eingesetzt. Als Harzkomponente wurde Dertophene T zu 37,5 % (bezogen auf die Zusammensetzung der klebemassen-Komponenten, siehe oben) eingesetzt.

### Beispiel 25

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,02% Al-Chelat (bezogen auf das Polyacrylat) vernetzt.

### Beispiel 26

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,03 GT Al-Chelat (bezogen auf 100 GT Polyacrylat) vernetzt.

### Beispiel 27

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,04 GT Erysis GA 240 und 0,05 GT Al-Chelat (bezogen auf 100 GT Polyacrylat) vernetzt.

### Beispiel 28

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,035 GT Erysis GA 240 und 0,075 GT Al-Chelat (bezogen auf 100 GT Polyacrylat) vernetzt.

### Beispiel 29

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,035 GT Erysis GA 240 und 0,1 GT Al-Chelat (bezogen auf 100 GT Polyacrylat) vernetzt.

**Beispiel 30**

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,02 GT Erysis GA 240 und 0,15 GT Al-Chelat (bezogen auf 100 GT Polyacrylat) vernetzt.

**Beispiel 31**

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,02 GT Erysis GA 240 und 0,2 GT Al-Chelat (bezogen auf 100 GT Polyacrylat) vernetzt.

**Beispiel 32**

Es wurde analog Beispiel 24 vorgegangen. Der Acrylatanteil lag bei 42,5%, die Harzkomponente bei 37,5% und die zweite Polymerkomponente Kraton D1118 bei 20%. Es wurde mit 0,01 GT Erysis GA 240 und 0,02 GT Al-Chelat (bezogen auf 100 GT Polyacrylat) vernetzt.

**Beispiel 33**

Herstellung des Polyacrylats III

Ein für radikalische Polymerisationen unter Siedekühlung geeigneter konventioneller 2 L-Glasreaktor wurde mit 300 g einer Monomermischung, enthaltend 148,5 g Butylacrylat, 148,5 g Ethylhexylacrylat und 3 g Acrylsäure, und 165 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Siedegrenzenbenzin 60/95 verdünnt. Nach 5:30 Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Siedegrenzenbenzin 60/95 verdünnt. Die Reaktion wurde nach 24 h Reaktionszeit abgebrochen und auf Raumtemperatur abgekühlt. Molmassen mittels GPC: Mn = 90000 g/mol, Mw = 1200000 g/mol)

Der wie vorstehend beschrieben erhaltenen Polyacrylat-Lösung (Polyacrylat: 49,5 % 2-Ethylhexylacrylat, 49,5 % n-Butylacrylat, 1 % Acrylsäure, Mn = 90000 g/mol, Mw = 1200000 g/mol) wurde die gewünschte Harzmenge zugegeben und so mit einem Lösungsmittelgemisch Benzin : Aceton 70 : 30 verdünnt, dass ein Endfeststoffgehalt von 35 Gew.-% resultierte und für 12 h auf einer Rollbank gelöst. Schließlich wurde die Vernetzerlösung (3 Gew.-% in Aceton) zugegeben und mittels eines Streichrakels auf einem Laborstreichtisch auf einem silikonisiertes Trennpapier beschichtet. Die Beschichtungen wurden anschließend bei 120 °C für 15 min getrocknet. Die Klebeschichten mit einem Schichtdicke von 50 μm wurden auf eine 12 μm PET-Folie kaschiert, so dass ein doppelseitiges Klebebandmuster resultierte. Die Muster wurde zwei Woche bei Normklima (23 °C, 50 % relative Feuchte) konditioniert.

Der Acrylatanteil lag bei 70 % (bezogen auf die Zusammensetzung der Klebemassen-Komponenten, siehe oben) und es wurde mit S-610 (0,04 GT bezogen auf das Polyacrylat) vernetzt. Als Harzkomponente wurde Dertophene T 110 zu 30 % (bezogen auf die Zusammensetzung der Klebemassen-Komponenten, siehe oben) eingesetzt.

**Beispiel 34**

Es wurde analog Beispiel 33 vorgegangen. Der Acrylatanteil lag bei 70% und die Harzkomponente betrug 30%. Es wurde mit 0,025 GT S-610 und 0,055 GT Al-Chelat (bezogen auf 100 GT Polyacrylat) vernetzt.

**Beispiel 35**

Es wurde analog Beispiel 33 vorgegangen. Der Acrylatanteil lag bei 70% und die Harzkomponente betrug 30%. Es wurde mit 0,055 GT S-610 und 0,095 GT Al-Chelat (bezogen auf 100 GT Polyacrylat) vernetzt.

**Beispiel 36**

Es wurde analog Beispiel 33 vorgegangen. Der Acrylatanteil lag bei 70% und die Harzkomponente betrug 30%. Es wurde mit 0,02 GT S-610 und 0,075 GT Al-Chelat (bezogen auf 100 GT Polyacrylat) vernetzt.

**Beispiel 37**

Es wurde analog Beispiel 33 vorgegangen. Der Acrylatanteil lag bei 70% und die Harzkomponente betrug 30%. Es wurde mit 0,02 GT S-610 und 0,045 GT Al-Chelat (bezogen auf 100 GT Polyacrylat) vernetzt.

**Ergebnisse**

| Beispiel | Anteil Erysis GA 240 [GT] | Anteil Al-Chelate [GT] | Molares Verhältnis Erysis GA 240 : Al-Chelate | NPT (Methode E) [mm] | Mikro-schertest (Methode D) Max [µm] | Mikroschertest (Methode D) elast. [%] | Klebkraft [N/cm] (Methode B) | Reworkability (Methode C) |
|---|---|---|---|---|---|---|---|---|
| 1 | 0,02 | | | 24 | 595 | 32 | 8 | K |
| 2 | 0,03 | | | 5 | 344 | 43 | 7,5 | MB |
| 3 | 0,04 | | | 3 | 244 | 44 | 7,4 | MB |
| 4 | 0,05 | | | 25 | 213 | 65 | 7,6 | A |
| 5 | | 0,1 | | 14 | 264 | 37 | 7,4 | K |
| 6 | | 0,2 | | 22 | 160 | 48 | 7,3 | MB |
| 7 | | 0,3 | | 37 | 90 | 54 | 6,9 | MB |
| 8 | | 0,4 | | 40 | 37 | 60 | 7,3 | A |
| *9* | *0,04* | *0,15* | *1 : 4,2* | *9* | *223* | *71* | *7,2* | *A* |
| 10 | 0,03 | 0,02 | 1 : 0,7 | 10 | 274 | 61 | 7,7 | A |
| **11** | **0,03** | **0,055** | **1 : 2** | **5** | **208** | **60** | **7,2** | **A** |
| **12** | **0,025** | **0,05** | **1 : 2,2** | **4** | **294** | **52** | **7,1** | **A** |
| **13** | **0,03** | **0,075** | **1 : 2,8** | **3** | **209** | **67** | **7,6** | **A** |
| *14* | *0,02* | *0,075* | *1 : 4,2* | *8* | *201* | *66* | *7,3* | *A* |
| 15 | 0,03 | | | 4 | 1646 | 35 | 14,1 | K |
| 16 | 0,04 | | | 8 | 1041 | 54 | 13,5 | MB |
| 17 | 0,05 | | | 25 | 719 | 69 | 12,8 | A |
| 18 | | 0,2 | | 36 | 526 | 78 | 12,7 | A |
| 19 | | 0,3 | | 34 | 385 | 77 | 13 | A |
| *20* | *0,04* | *0,05* | *1 : 1,4* | *7* | *433* | *59* | *12,9* | *A* |
| **21** | **0,035** | **0,075** | **1 : 2,4** | **3** | **512** | **58** | **13,2** | **A** |
| **22** | **0,035** | **0,1** | **1 : 3,7** | **4** | **728** | **67** | **12,2** | **A** |
| 23 | 0,02 | 0,15 | 1 : 8,3 | 27 | 469 | 77 | 13,3 | A |
| 24 | | 0,1 | | 31 | 281 | 31 | 11,3 | K |
| 25 | | 0,2 | | 2 | 195 | 44 | 11,3 | MB |
| 26 | | 0,3 | | 18 | 81 | 64 | 10,7 | A |
| *27* | *0,04* | *0,05* | *1 : 1,4* | *8* | *264* | *57* | *10,9* | *A* |
| **28** | **0,035** | **0,075** | **1 : 2,4** | **3** | **278** | **59** | **10,9** | **A** |
| **29** | **0,035** | **0,1** | **1 : 3,7** | **5** | **226** | **63** | **11,4** | **A** |
| 30 | 0,02 | 0,15 | 1 : 8,3 | 3 | 234 | 48 | 11,2 | MB |
| 31 | 0,02 | 0,2 | 1 : 11,1 | 7 | 241 | 53 | 11,4 | MB |
| 32 | 0,01 | 0,02 | 1 : 2,2 | 8 | 269 | 38 | 11,8 | MB |

| Beispiel | Anteil S-610 [GT] | Anteil Al-Chelate [GT] | Molares Verhältnis S-610 : Al-Chelate | NPT (Methode E) [mm] | Mikro-schertest (Methode D) Max [µm] | Mikroschertest (Methode D) elast. [%] | Klebkraft [N/cm] (Methode B) | Reworkability (Methode C) |
|---|---|---|---|---|---|---|---|---|
| 33 | 0,04 | | | 40 | 148 | 80 | 9,8 | A |
| **34** | **0,025** | **0,055** | **1 : 2,5** | **2** | **158** | **65** | **10,1** | **A** |
| 35 | 0,055 | 0,095 | 1 : 2,0 | 36 | 71 | 73 | 9,6 | A |
| *36* | *0,02* | *0,075* | *1 : 4,2* | *9* | *87* | *72* | *9,8* | *A* |
| **37** | **0,02** | **0,045** | **1 : 2,5** | **0** | **219** | **66** | **9,8** | **A** |

Erfindungsgemäß gute Beispiele (durch Fettdruck gekennzeichnet): 11,12,13,21,22,28,29,34,37

Erfindungsgemäß noch befriedigende Beispiele (durch Kursivdruck/Unterstrich gekennzeichnet): 9,14,20,27,36

Gegenbeispiele (erfüllen die erfindungsgemäß gestellten Anforderungen nicht): 1 bis 8, 10, 15 bis 19, 23 bis 26, 30 bis 33, 35

Haftklebemassen werden in dem bekannten Stand der Technik mit nur jeweils einem singulär verwendetem kovalenten Vernetzers oder alternativ mit einem singulär verwendetem koordinativen Vernetzer auf eine notwendige Kohäsionsfestigkeit eingestellt. Hierdurch lässt sich das erforderliche Anforderungsprofil jedoch nicht vollständig realisieren.

Durch die Menge des eingesetzten Vernetzers kann der Rückstoßwiderstad (nach Methode E) des Haftklebers eingestellt werden. Wie die Beispiele 1-4 zeigen, kann mit einem kovalenten Vernetzer der Rückstoßwiderstad für 100% Acrylatmassen teilweise optimiert werden (Bsp. 2 und 3). Der Anteil "elast" bei einem Mikroschertest (Methode D) liegt bei den genannten Beispielen 2 und 3 jedoch bei nur 48 bzw. 49 % (siehe dritte Spalte von links in den Tabellen), was zu einem Mischbruch mit Klebmasserückständen bei dem Reworkability-Test (Methode C) führt. Erfindungsgemäß erforderlich sind hier jedoch Adhäsionsbrüche, die mit einem "A" in der rechten Spalte der Tabellen gekennzeichnet sind. Die Kohäsionsfestigkeit dieser Beispiele reicht somit nicht aus, um eine rückstandsfreie Entfernung von Klebbändern nach der Anwendung zu gewährleisten. Daher ist ein elastischer Anteil "elast" bei dem Mikroschertest von mindestens 50 % erforderlich.

Weiterhin ist den Ergebnissen aus den Beispielen 5 bis 8 zu entnehmen, dass mit einem singulären koordinativen Vernetzer kein ausreichender Rückstoßwiederstand erreichbar ist.

Durch die Ergebnisse der Beispiele 15-19, 24 bis 26 und 33 ist erkennbar, dass sich auch bei harzmodifizierten Polyacrylaten oder auch zusätzlich durch das Mischen mit weiteren Elastomeren das grundsätzlich vergleichbare Verhalten sehen lässt. Durch die Variation des allein vorliegenden kovalenten oder alternativ des allein vorliegenden koordinativen Vernetzers ist eine Verbesserung des Rückstoßwiederstands nur erreichbar, wenn die Kohäsionsfestigkeit auf ein unvorteilhaftes Niveau abgesenkt wird, bei dem es zu Rückständen beim Reworkability Test kommt.

Ohne dass dies vorherzusehen war, wird die erfindungsgemäß gestellte Aufgabe durch eine Klebemasse erreicht, die ein Vernetzersystem, umfassend zumindest einen kovalenten und zumindest einen koordinativen Vernetzer beinhaltet. Bevorzugt wird das Verhältnis der beiden Vernetzertypen zueinander günstig gewählt.

Wie Beispiele 11 bis 13, 21 bis 22, 28 bis 29, 34 und 37 zeigen, kann eine Klebemasse mit einer Kombination des kovalenten und des koordinativen Vernetzers eine Verbesserung des Rückstoßwiederstands erreicht werden, und zugleich ist eine Kohäsionsfestigkeit für eine gute Reworkability ausreichend.

Der Anteil des kovalenten Vernetzers liegt bei den erfindungsgemäß zumindest befiredigenden Mustern zwischen 0,015 und 0,04 % Gewichtsteilen Vernetzer auf 100 Gewichtsteile der Polyacrylat-Komponente der jeweiligen Klebemasse, wohingegen der Anteil des koordinativen Vernetzers bei 0,03 und 0,15 Gewichtsteilen liegt. Für besonders gute Ergebnisse lag der Anteil des kovalenten Vernetzers zwischen 0,02 und 0,035 %; der Anteil des koordinativen Vernetzers zwischen 0,04 und 0,1 Gewichtsteilen.

Für den Fachmann überraschend zeigte sich dabei ein Optimum des molaren Verhältnis von kovalenten Vernetzern zu korrdinativen Vernetzern - also das Verhältnis der eingesetzten Stoffmenge $n_{kov}$ der kovalenten Vernetzer zur eingesetzten Stoffmenge $n_{koord}$ des Metalatoms des koordinativen Vernetzer. Dieses lag im Bereich zwischen 1 : 1,3 bis 1 : 1,45; im optimierten Bereich von 1 : 2 bis 1 : 4.

Ein Abweichen von den oben beschriebenen Mengen oder dem beschriebenen optimalen Verhältnis führt entweder zu einem Name-Plate-Test Ergebnis von mehr als 10 mm - wobei besonders gute Beispiele sogar diejenigen mit einem Wert von 5 mm oder weniger zu verstehen sind - und somit nicht ausreichend erwünschtem Rückstoßwiederstand, oder es führt zu einer nicht ausreichenden Kohäsionsfestigkeit der Klebemasse. Beispiele 10, 23, 30 bis 32, 35 belegen dies.

**Patentansprüche**

1. Vernetzbare Klebemasse, umfassend

   zumindest eine erste Basispolymerkomponente mit für eine kovalente Vernetzung und für eine koordinative Vernetzung geeigneten funktionellen Gruppen,
   sowie zumindest einen kovalenten Vernetzer,
   und zumindest einen koordinativen Vernetzer,
   **dadurch gekennzeichnet, dass**
   die Basispolymerkomponente eine Polyacrylatkomponente ist;
   die kovalenten Vernetzer in einer Gesamtmenge von 0,015 bis 0,04 Gewichtsteilen, bezogen auf 100 Gewichtsteile der Basispolymerkomponente, vorliegen;
   die koordinativen Vernetzer in einer Gesamtmenge von 0,03 bis 0,15 Gewichtsteilen, bezogen auf 100 Gewichtsteile der Basispolymerkomponente, vorliegen; und
   das molare Verhältnis von kovalenten Vernetzern zu koordinativen Vernetzern im Bereich von 1 : 1,3 bis 1 : 4,5 liegt.

2. Vernetzbare Klebemasse nach Anspruch 1, **dadurch gekennzeichnet, dass** es sich um eine Haftklebemasse handelt.

3. Vernetzbare Klebemasse nach einem der vorangehenden Ansprüche, **dadurch gekennzeichnet, dass** als kovalente Vernetzer multifunktionelle Glycidylamine, multifunktionelle Epoxide, multifunktionelle Aziridine und oder multifunktionelle Isocyanate eingesetzt werden.

4. Vernetzbare Klebemasse nach Anspruch 3, dadurch gekennzeichent, dass die kovalenten Vernetzer gewählt sind aus der folgenden Gruppe:
   N,N,N',N'-Tetrakis(2,3-epoxypropyl)cyclohexane-1,3-dimethylamine, N,N,N',N'-tetra-kis(2,3-epoxypropyl)-m-xylen-a,a'-diamin, 2,2-Bis(hydroxymethyl)-1,3-propanediol, (3,4-Epoxycyclohexan)methyl-3,4-epoxycyclohexylcarboxylat, Trimethylolpropan- tris(2-methyl-1-aziridinepropionate), Tolylendiisocyanat (TDI), 2,4-Tolylendiisocyanatdimer, Naphthylen-1,5-diisocyanat (NDI), o-Tolylendiisocyanat (TODI), Diphenylmethandiisocyanat (MDI), Triphenylmethantriisocyanat, Tris-(p-isocyanatphenyl)thiophos-phit, Polymethylenpolyphenylisocyanat.

5. Vernetzbare Klebemasse nach einem der vorangehenden Ansprüche, **dadurch gekennzeichnet, dass** als koordinative Vernetzer mehrwertige Metallchelaltverbindungen eingesetzt werden.

6. Vernetzbare Klebemasse nach Anspruch 5, **dadurch gekennzeichnet, dass** Al(III)-, Zr(IV)- und/oder Ti(IV)-Chelatverbindungen als koordinative Vernetzer gewählt werden, insbesondere Al(III)-acetylacetonat.

7. Vernetzbare Klebemasse nach einem der vorangehenden Ansprüche, bestehend aus den folgenden Komponenten:

   (a) zumindest der ersten Basiskomponente mit

   (a1) als erster Polymerkomponente eine Basispolymerkomponente (im folgenden

   auch kurz als Basispolymer bezeichnet) aus einem Homopolymer, einem Copolymer oder einer homogenen Mischung aus mehreren Homopolymeren, mehreren Copolymeren oder einem oder mehreren Homopolymeren mit einem oder mehreren Copolymeren,

wobei zumindest eines der Homopolymere oder zumindest eines der Copolymere, insbesondere alle der Polymere der Basispolymerkomponente für die Vernetzung funktionelle Gruppen aufweisen,

(a2) gegebenenfalls weitere mit der Basispolymerkomponente homogen mischbare oder in diesem lösliche Bestandteile, wie Harze oder Additive, Monomerreste, kurzkettige Polymerisationsprodukte (Nebenprodukte), Verunreinigungen etc.;

(b) optional einer zweiten Komponente mit

(b1) als weitere Polymerkomponente mit dem Basispolymer im Wesentlichen nicht homogen mischbare Polymere, insbesondere solche ohne vernetzungsfähige Gruppen,
(b2) gegebenenfalls weitere mit dem Basispolymer im Wesentlichen nicht homogen mischbare und in diesem nicht lösliche Bestandteile, wie bestimmte Harze oder Additive, wobei die Komponente (f) insbesondere ganz oder teilweise mit der optional vorhandenen weiteren Polymerkomponente (b) homogen mischbar ist;

(c) Vernetzern, nämlich

(c1) zumindest dem einen kovalenten Vernetzer,
(c2) zumindest dem einen koordinativen Vernetzer,

und
(d) gegebenenfalls Lösemittel oder Lösemittelreste.

**8.** Vernetzbare Klebemasse nach einem der vorangehenden Ansprüche, **dadurch gekennzeichnet, dass** als für eine kovalente Vernetzung und für eine koordinative Vernetzung geeigneten funktionellen Gruppen Säuregruppen genutzt werden, insbesondere durch Verwendung von Acrylsäure als Comonomer für zumindest ein Polymer der Basispolymerkomponente.

**9.** Vernetzte Klebemasse, erhältlich durch Vernetzung der vernetzbaren Klebemasse nach einem der vorangehenden Ansprüche.

## Claims

**1.** Crosslinkable adhesive comprising

at least one first base polymer component having functional groups suitable for covalent crosslinking and for coordinative crosslinking,
and also at least one covalent crosslinker,
and at least one coordinative crosslinker, **characterized in that**
the base polymer component is a polyacrylate component;
the covalent crosslinkers are present in a total amount of 0.015 to 0.04 part by weight, based on 100 parts by weight of the base polymer component;
the coordinative crosslinkers are present in a total amount of 0.03 to 0.15 part by weight, based on 100 parts by weight of the base polymer component; and the molar ratio of covalent crosslinkers to coordinative crosslinkers is in the range from 1:1.3 to 1:4.5.

**2.** Crosslinkable adhesive according to Claim 1, **characterized in that** it is a pressure sensitive adhesive.

**3.** Crosslinkable adhesive according to either of the preceding claims, **characterized in that** covalent crosslinkers used are polyfunctional glycidylamines, polyfunctional epoxides, polyfunctional aziridines and or polyfunctional isocyanates.

**4.** Crosslinkable adhesive according to Claim 3, **characterized in that** the covalent crosslinkers are selected from the following group: N,N,N',N'-tetrakis(2,3-epoxypropyl)cyclohexane-1,3-dimethylamine,     N,N,N',N'-tetrakis(2,3-epoxypropyl)-m-xylene-a,a'-diamine, 2,2-bis(hydroxymethyl)-1,3-propanediol, (3,4-epoxycyclohexane)methyl 3,4-epoxycyclohexylcarboxylate, trimethylolpropane tris(2-methyl-1-aziridinepropionate), tolylene diisocyanate (TDI), 2,4-tolylene diisocyanate dimer, naphthylene 1,5-diisocyanate (NDI), o-tolylene diisocyanate (TODI), diphenylmethane diisocyanate (MDI), triphenylmethane triisocyanate, tris(p-isocyanatophenyl) thiophosphite, polymethylenepolyphenyl isocyanate.

**5.** Crosslinkable adhesive according to any of the preceding claims, **characterized in that** coordinative crosslinkers used are polyvalent metal chelate compounds.

**6.** Crosslinkable adhesive according to Claim 5, **characterized in that**
Al(III), Zr(IV) and/or Ti(IV) chelate compounds are selected as coordinative crosslinkers, especially Al(III) acetylacetonate.

**7.** Crosslinkable adhesive according to any of the preceding claims, consisting of the following components:

(a) at least the first base component having

(a1) as first polymer component, a base polymer component (also referred to below for short as base polymer) composed of a homopolymer, a copolymer, or a homogeneous mixture of two or more homopolymers, two or more copolymers, or one or more homopolymers with one or more copolymers, with at least one of the homopolymers or at least one of the copolymers, more particularly all of the polymers, of the base polymer component having functional groups for crosslinking,
(a2) optionally further constituents, homogeneously miscible with or soluble in the base polymer component, such as resins or additives, monomer residues, shortchain polymerization products (byproducts), impurities, etc.;

(b) optionally a second component having

(b1) as further polymer component, polymers substantially not homogeneously miscible with the base polymer, more particularly polymers without crosslinkable groups,
(b2) optionally further constituents substantially not homogeneously miscible with and not soluble in the base polymer, such as certain resins or additives, with component (f) in particular being wholly or partly homogeneously miscible with the optional further polymer component (b);

(c) crosslinkers, specifically

(c1) at least the one covalent crosslinker,
(c2) at least the one coordinative crosslinker,

and
(d) optionally solvents or solvent residues.

**8.** Crosslinkable adhesive according to any of the preceding claims, **characterized in that** as functional groups suitable for covalent crosslinking and for coordinative crosslinking, acid groups are utilized, more particularly through use of acrylic acid as comonomer for at least one polymer of the base polymer component.

**9.** Crosslinked adhesive obtainable by crosslinking the crosslinkable adhesive according to any of the preceding claims.

**Revendications**

**1.** Masse adhésive réticulable, comprenant

au moins un premier composant polymérique de base doté de groupes fonctionnels appropriés pour une réticulation covalente et pour une réticulation par coordination,
ainsi qu'au moins un agent de réticulation covalente,
et au moins un agent de réticulation par coordination,
**caractérisée en ce que** le composant polymérique de base est un composant de type polyacrylate ;

les agents de réticulation covalente sont présents en une quantité totale de 0,015 à 0,04 partie en poids, par rapport à 100 parties en poids du composant polymérique de base ;

les agents de réticulation par coordination sont présents en une quantité totale de 0,03 à 0,15 partie en poids, par rapport à 100 parties en poids du composant polymérique de base ; et

le rapport molaire d'agents de réticulation covalente sur agents de réticulation par coordination se situe dans la plage de 1 : 1,3 à 1 : 4,5.

2.  Masse adhésive réticulable selon la revendication 1, **caractérisée en ce qu'**il s'agit d'une masse autoadhésive.

3.  Masse adhésive réticulable selon l'une quelconque des revendications précédentes, **caractérisée en ce que** des glycidylamines multifonctionnelles, des époxydes multifonctionnels, des aziridines multifonctionnelles et/ou des isocyanates multifonctionnels sont utilisé(e)s en tant qu'agents de réticulation covalente.

4.  Masse adhésive réticulable selon la revendication 3, **caractérisée en ce que** les agents de réticulation covalente sont choisis dans le groupe suivant :
N,N,N',N'-tétrakis(2,3-époxypropyl)cyclohexane-1,3-diméthylamine,     N,N,N',N'-tétrakis(2,3-époxypropyl)-m-xylène-a,a'-diamine,  (3,4-époxycyclohexane)méthyl-3,4-époxycyclohexylcarboxylate  de  2,2-bis(hydroxyméthyl)-1,3-propanediol, tris(2-méthyl-1-aziridinepropionate) de triméthylolpropane, diisocyanate de toluylène (TDI), dimère de 2,4-diisocyanate de toluylène, 1,5-diisocyanate de naphtalène (NDI), diisocyanate de o-toluylène (TODI), diisocyanate de diphénylméthane (MDI), triisocyanate de triphénylméthane, tris-(p-isocyanatophényl)thiophosphite, polyméthylènepolyphénylisocyanate.

5.  Masse adhésive réticulable selon l'une quelconque des revendications précédentes, **caractérisée en ce que** des composés de chélate métallique sont utilisés en tant qu'agents de réticulation par coordination.

6.  Masse adhésive réticulable selon la revendication 5, **caractérisée en ce que** des composés de chélate de Al(III), Zr(IV) et/ou Ti(IV) sont choisis comme agents de réticulation par coordination, en particulier l'acétylacétonate de Al(III).

7.  Masse adhésive réticulable selon l'une quelconque des revendications précédentes, constituée des composants suivants :

    (a) au moins le premier composant de base comportant

        (a1) en tant que premier composant polymérique, un composant polymérique de base (également désigné polymère de base dans ce qui suit) composé d'un homopolymère, d'un copolymère ou d'un mélange homogène de plusieurs homopolymères, de plusieurs copolymères ou d'un ou plusieurs homopolymères avec un ou plusieurs copolymères,
        au moins l'un des homopolymères ou au moins l'un des copolymères, en particulier tous les polymères du composant polymérique de base présentant des groupes fonctionnels pour la réticulation,
        (a2) éventuellement d'autres ingrédients miscibles de manière homogène avec le composant polymérique de base ou solubles dans celui-ci, comme des résines ou des additifs, des radicaux monomériques, des produits de polymérisation à chaîne courte (sous-produits), des impuretés etc. ;

    (b) éventuellement un deuxième composant comportant

        (b1) en tant que composant polymérique supplémentaire, des polymères essentiellement non miscibles de manière homogène avec le polymère de base, en particulier ceux sans groupes réticulables,
        (b2) éventuellement d'autres ingrédients essentiellement non miscibles de manière homogène avec le polymère de base et non solubles dans celui-ci, comme certaines résines et certains additifs, le composant (f) étant miscible de manière homogène en particulier totalement ou partiellement avec le composant polymérique (b) supplémentaire éventuellement présent ;

    (c) des agents de réticulation, à savoir

        (c1) au moins ledit agent de réticulation covalente,
        (c2) au moins ledit agent de réticulation par coordination,

et

(d) éventuellement des solvants ou des résidus de solvant.

**8.** Masse adhésive réticulable selon l'une quelconque des revendications précédentes, **caractérisée en ce qu'**en tant que groupes fonctionnels appropriés pour une réticulation covalente et pour une réticulation par coordination, des groupes de type acide sont utilisés, en particulier en utilisant l'acide acrylique en tant que comonomère pour au moins un polymère du composant polymérique de base.

**9.** Masse adhésive réticulée, pouvant être obtenue par réticulation de la masse adhésive réticulable selon l'une quelconque des revendications précédentes.

Fig. 1:  Das 33°-NPT-Gestell

Fig. 2:  Maße (im mm) und Biegung der Metallplatte des 33°-NPT-Gestell.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1312097 A1
- EP 1300452 A2
- DE 10229527 A1
- WO 2006108871 A1

- EP 1367608 A2
- EP 1315781 A1
- DE 10329994 A1

**In der Beschreibung aufgeführte Nicht-Patentliteratur**

- **C. DONKER.** *PSTC Annual Technical Seminar, Proceedings, S.,* Mai 2001, 149-164

- **C. DONKER.** *PSTC Annual Technical Seminar, Proceedings, S,* Mai 2001, 149-165